# EUROPEAN PATENT APPLICATION

(11) **EP 1 168 715 A2**
(43) Date of publication of application: **02.01.2002**
(21) Application number: 01114764.2
(22) Date of filing: 25.06.2001
(51) Int. Cl.: H04L 12/28, H04L 29/06

(54) **Multimedia information delivery system and mobile information terminal device**

(30) Priority: 30.06.2000 JP 2000198124
(71) Applicant: Hitachi, Ltd., Chiyoda-ku, Tokyo 101-8010 (JP)
(72) Inventor: Kuzunuki, Soshiro, Hitachinaka-shi, Ibaraki 312-0011 (JP); Matsuda, Yasumasa, Nerima-ku, Tokyo 176-0013 (JP); Hamada, Nagaharu, Kurashiki-shi, Okayama 710-0824 (JP); Nakamura, Toshiaki, Hitachinaka-shi, Ibaraki 312-0062 (JP); Yokota, Toshimi, Hitachiota-shi, Ibaraki 313-0049 (JP); Abe, Keiko, Hitachi-shi, Ibaraki 319-1221 (JP)
(74) Representative: Beetz & Partner Patentanwälte

(57) **Abstract**

A plurality of handheld or "mobile" information terminals (10a - 10n) send forth position information detected periodically toward an information delivery server (50); the information delivery server (50) comprises a position management unit (50-4) for generating image data used to compose for visual display certain users belonging to the same group onto the same land map image screen, a situation/history management unit (50-7) for arithmetically processing the user's distribution in units of target facilities and then generating information indicative of such distribution, an image management unit (50-9) for storing therein more than one photographic image as sent from mobile information terminal(s) in units of users or alternatively in units of groups and then transferring the stored image toward a target or "destination" mobile information terminal, and a route search management unit (50-6) for searching for a recommendable route in view of the degree of congestion and/or popularity as calculated at the situation/history management unit (50-7). In a multimedia information delivery system, perform provision of information services by recognizing the position of a user and then utilizing the user position thus recognized.

## Description

### Background of the Invention:

### <Technical Field of the Invention>

The present invention relates generally to handheld or "mobile" information terminals for access to networks and a server for delivery of information, and more particularly to mobile-oriented multimedia information provision systems employing position information detectable mobile information terminals. The invention also relates to multimedia information delivery systems for service-providing information as to a distribution of people at land spots including but not limited to event places and sightseeing spots, along with mobile information terminals operatively associated therewith.

### <Prior Arts>

As a mobile-oriented information guidance apparatus, prior known schemes for guiding land area information and peripheral personal information plus visit history information in accordance with the position of a terminal are disclosed, for example, in Japanese application patent laid-open publication No. Hei 11-55726 (first prior art) and Japanese application patent laid-open publication No. Hei 11-252003 (second prior art). In addition, there are also commercially available today those products that are designed to utilize portable or handheld radiotelephone handsets and/or amateur radio stations to map-display mutual positions or locations on a land map of on-vehicle navigation devices (third prior art).

Additionally, those for detecting the degree of crowdedness or congestion at a specific place or land spot include the one that detects such congestion by use of image processing technologies as disclosed in Japanese application patent laid-open publication No. Hei 10-312448 (fourth prior art).

Alternatively, generally in the case for detection of the degree of popularity, it has been disclosed for example in Japanese application patent laid-open publication No. Hei 9-91308 (fifth prior art) to provide a page access counter on a home page on the Internet--a worldwide collection of networks and gateways as well known in the art--for calculation of the popularity from the resultant count number thereof.

Additionally, as the prior art for servicing images on networks, there is a technique as disclosed in Japanese application patent laid-open publication No. Hei 11-154218 (sixth prior art).

However, in the first and second prior arts, privacy problems might occur although these advantageously offer capabilities to specify personal information from position information. In particular, in sightseeing spots and/or event places, people may act together in groups: in such case, although it is required to be aware of the positions of persons belonging to the same group, it is no longer necessary to know positions of persons of no concern.

On the other hand, with the third prior art, it is required to let the terminal side have land map information, which results in mobile information terminals suffering from occurrence of size/cost problems. Another problem is that communication gets started once at a time whenever an attempt is made to search for a present position of a partner or companion of interest, which in turn leads to reduction of usability with an increase in number of the individuals who belong to the group.

Further, with the fourth prior art, there is a problem such as an incapability to install any stationary cameras at unspecifiable places such as sightseeing spots or the like.

Also note that with the fifth prior art, the degree of popularity detected is a mere favorite on networks, and thus a problem occurs as to an inability to well reflect the actual popularity of any place and/or sightseeing spot concerned.

Additionally with the sixth prior art is the one that merely performs printout services of photographic images taken or "shot" at home, which is not the one that services accommodation or "importation" of photo images obtained at event places and/or sightseeing spots on a real time basis and thus is encountered with a problem as to inferiority of usability.

### Summary of the Invention:

The present invention has been made in view of the above points, and its primary object is to provide, in a multimedia information delivery system comprising both a plurality of information terminal devices and server apparatus, an improved information delivery system and information terminal device(s) capable of recognizing positions of users who are carrying their information terminal devices to thereby provide information services by utilizing the positions thus recognized.

Another object of this invention is to effectively make full use, in a multimedia information delivery system comprising both a plurality of information terminal devices and server apparatus, of information processing functions and information storage functions as built in the server apparatus while at the same time letting the information terminal devices connected via communication links to the server apparatus be less in weight and yet high in cost savability in a way suitable for increase in hand-carriability thereof.

To attain the foregoing objects the information delivery system in accordance with this invention is arranged to provide, in each of a plurality of information terminal devices, position detection means for detecting its own position, terminal side communication means for sending information indicative of such detected position toward a server apparatus while receiving information as sent from the server apparatus, operation instruction receipt means for receiving and accepting from a user his or her operation instruction for instruction of the content of a service required and for permitting transmission of the operation instruction to said server apparatus via said terminal side communication means, and output means for outputting information being sent from said server apparatus in a way corresponding to said service required while providing in the server apparatus server side communication means for receiving information indicating a position as sent from said each information terminal device and for sending information being generated by utilization of the position information to the information terminal device and processor means for utilizing the position information as sent from said information terminal device to thereby generate information to be sent to said information terminal device.

Furthermore, in the information delivery system of the instant invention, said information terminal device is the one that is designed to send the information as to the position of such information terminal device to said server apparatus in cases where a specified time has elapsed from its previous position information transfer event or alternatively in case the position has changed by a degree greater than a predefined threshold value, characterized in that said server apparatus further comprises position information storage means for storing therein position information as sent from said plurality of information terminal devices in units of users of the information terminal devices.

### Brief Description of the Drawings:

Fig. 1 is an explanation diagram showing an overall configuration of a multimedia information delivery system in accordance with the present invention;
Fig. 2 is a block diagram showing one example of the internal arrangement of a portable or handheld information terminal device in accordance with this invention;
Fig. 3 is a block diagram showing one example of the inside configuration of an information delivery server;
Fig. 4 is an explanation diagram showing an application example to an event place as a typical application of the invention;
Fig. 5 is an explanation diagram showing an application example to a sightseeing spot as a typical application of the invention;
Fig. 6 is an explanation diagram showing an outline of a guidance service;
Fig. 7 is an explanation diagram showing an outline of a position service;
Fig. 8 is an explanation diagram showing an outline of a landmark service;
Fig. 9 is an explanation diagram showing an outline of a route search service;
Fig. 10 is an explanation diagram showing an outline of a situation/history service;
Fig. 11 is an explanation diagram showing an outline of personal service;
Fig. 12 is an explanation diagram showing an outline of an image service;
Fig. 13 is an explanation diagram showing an example of a business method or "model" in accordance with the invention;
Fig. 14 is a flowchart for realization of a guidance management function:
Fig. 15 is a flowchart for realizing a position management function;
Fig. 16 is a flowchart for realizing a self-position function.
Fig. 17 is a flowchart for realizing group position processing.
Fig. 18 is a flowchart for realizing group registration processing;
Fig. 19 is a flowchart for realizing a landmark management function;
Fig. 20 is a flowchart for realizing landmark display processing;
Fig. 21 is a flowchart for realizing landmark registration processing;
Fig. 22 is a flowchart for realizing landmark search processing;
Fig. 23 is a flowchart for realizing a route search management function;
Fig. 24 is a flowchart for realizing route search processing;
Fig. 25 is a flowchart for realizing recommended route search processing;
Fig. 26 is a flowchart for realizing a situation/history management function;
Fig. 27 is a flowchart for realizing congestion processing;
Fig. 28 is a flowchart for realizing popularity processing;
Fig. 29 is a flowchart for realizing history processing;
Fig. 30 is a flowchart for realizing a person management function;
Fig. 31 is a flowchart for realizing an image control function;
Fig. 32 is a flowchart for realizing image upload processing;
Fig. 33 is a flowchart for realizing image download processing;
Fig. 34 is a flowchart for realizing image printout processing;
Fig. 35 is a flowchart for realizing a charge collection function; and
Fig. 36 is an explanation diagram showing one example of a display screen to be displayed on a display screen of the handheld or "mobile" information terminal device of Fig. 2.

### Description of the Invention:

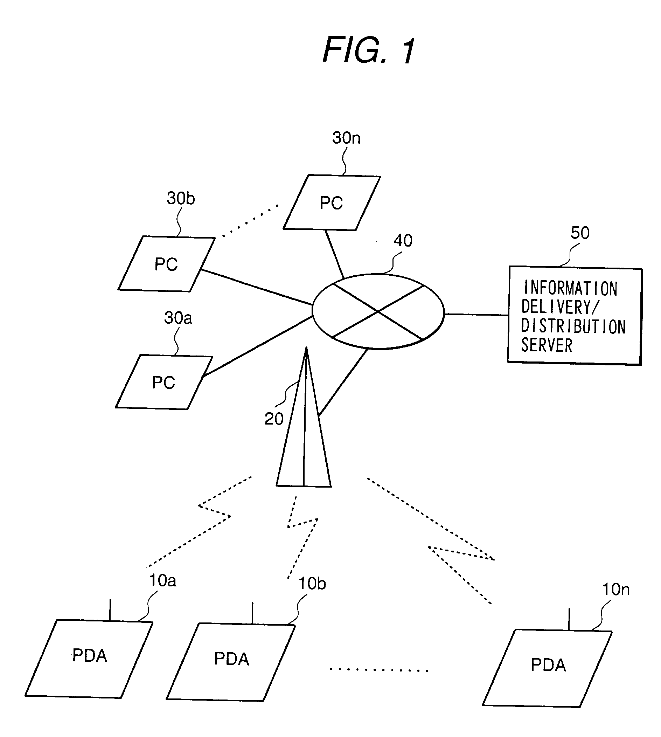

One preferred embodiment of the present invention will now be set forth with reference to the accompanying drawings of Figs. 1 through 36.

Fig. 1 is a diagram showing one exemplary entire configuration of a multimedia information delivery system in this embodiment. In the system of this embodiment, there are connected to a globe-spanning computer network called the Internet 40 an information transfer/delivery server 50 and ordinary users' "non-mobile" Internet terminals (personal computers or "PCs") 30a to 30n which are installed at specific positions plus a communication base station 20 offering capabilities to provide over-the-air radio communications.

On the other hand, handheld or mobile information terminals (personal digital assistants or "PDAs") 10a-10n are connected to the communication base station 20. It is possible to take information as to event places and/or sightseeing spots out of the information transfer/delivery server 50 whenever the need arises . The mobile information terminals 10a-10n are, for example, multifunction portable radiophone handsets with image pickup functionality and position detection functionality realizable by use of a global positioning system (GPS) and a camera(s). When a mobile information terminal 10 is built in a land vehicle, it becomes a server type car navigation device for implementation of navigation services upon receipt of information incoming from the server.

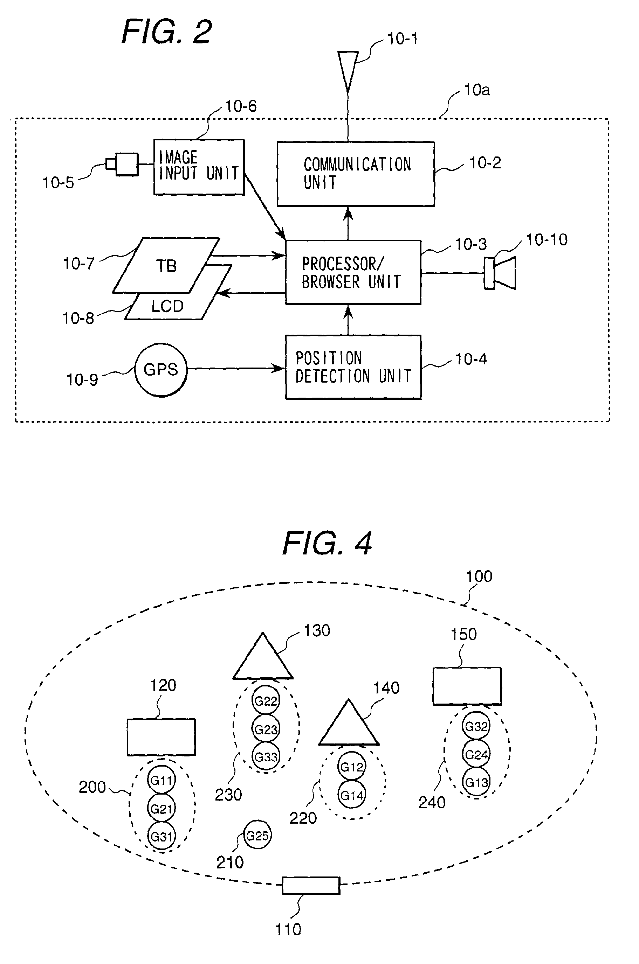

Fig. 2 is a diagram showing one example of the internal configuration of one mobile information terminal (PDA) 10a in the illustrative embodiment while the remaining mobile information terminals are similar in arrangement thereto. In Fig. 2, "10-1" designates a radiocommunication antenna; 10-2 denotes a communication unit that is operable to perform communication with the communication base station 20; 10-3 indicates a processor/browser unit which is constituted from a central processing unit (CPU) and a memory for performing control processing typically including overall control of the mobile information terminal while displaying a variety of cites as provided on the Internet; 10-9 is a position sensor (GPS) for detection of a present location of the mobile information terminal; 10-4, a position detector unit for detecting the location from a signal of GPS 10-9.

The position detector unit 10-4 is operable to detect the position periodically for sending forth information about the detected position toward the communication base station 20 via the processor/browser unit 10-3 and radiocommunication antenna 10-2. Alternatively it may be arranged, in place of the periodical position detection, to send the detected position information to the communication base station 20 in cases where a difference between the detected position information and its previous position information increases to go beyond a predefined value or alternatively in the event that an operation instruction is output or still alternatively in case communication is done with the information delivery server 50. In addition, although in the illustrative embodiment the GPS 10-9 is employed for position detection, the position detection methodology in the invention should not be limited thereto and may be modified to employ any other appropriate methods capable of specifying a present position or location of the mobile information terminal. For example, those methods for detecting the position by use of other means are be employable, such as a position detection method utilizing a personal handyphone system (PHS) and a method for detection the position by use of transport distances of radio wave from a plurality of base stations.

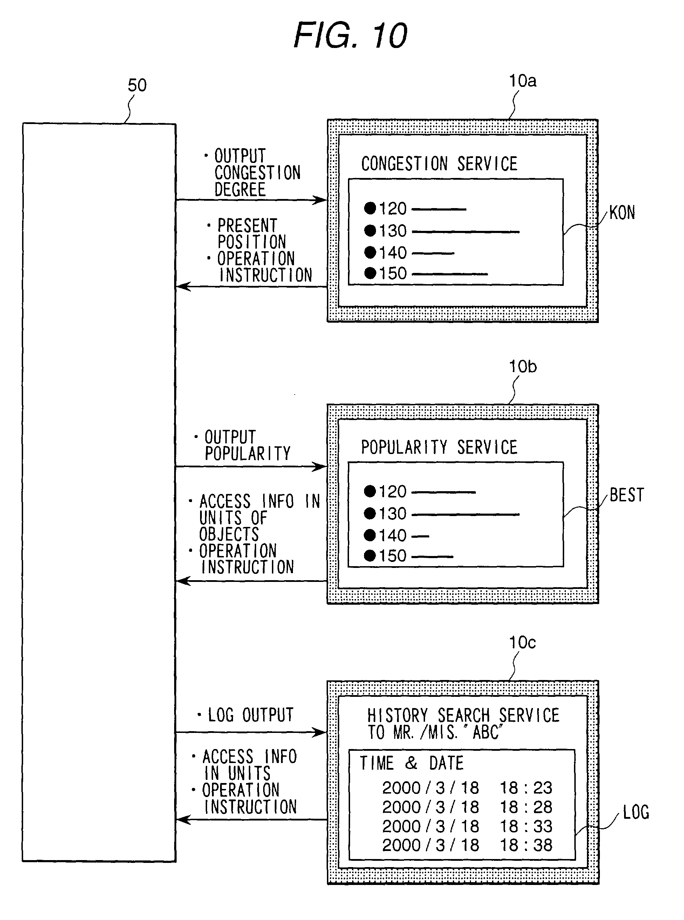

Further in Fig. 2, 10-5 designates a charge-coupled device (CCD) camera, a signal of which will be sent to the processor unit 10-3 via an image input unit 10-6. 10-7 is a coordinate input device (TB) whereas 10-8 is a display (liquid crystal display or "LCD" device), wherein these are designed to have an integrated structure with an arrangement permitting direct touch-pen input on a display screen. 10-10 is a laud speaker that functions as an audio output device.

Multimedia guidance in accordance with the invention as disclosed herein is realized based on linkage of a software of the processor unit 10-3 and a software of the information delivery server 50 while actively using peripheral devices that are involved in the above-stated mobile information terminal 10a.

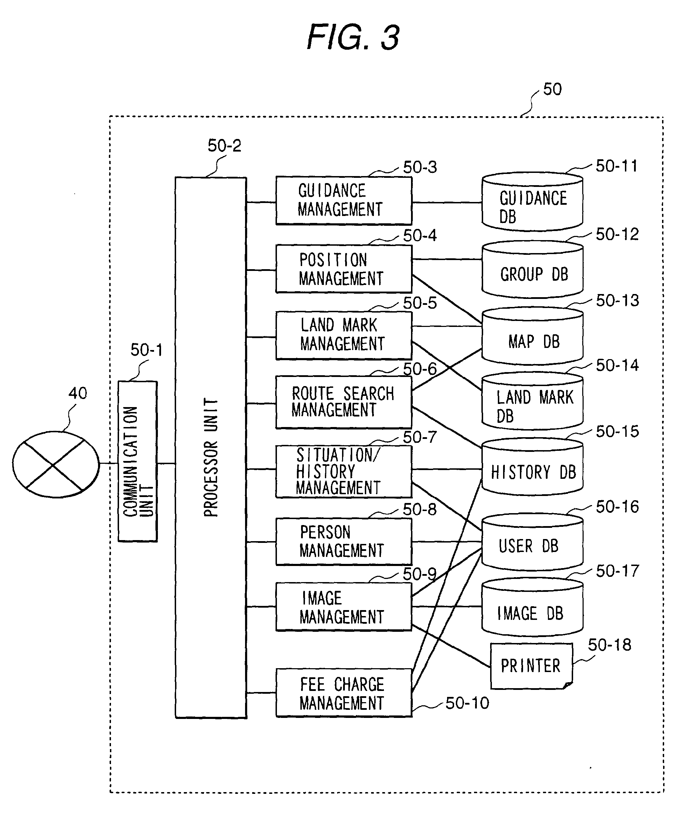

Fig. 3 is a diagram showing an exemplary internal configuration of the information delivery server 50. In Fig. 3, 50-1 designates a communication unit with the Internet 40; 50-2 denotes a processing unit of the information delivery server 50 as make up from a CPU and memory or memories for implementing required processings in conjunction with displaying by a browser software of the above-noted mobile information terminal 10 and also maintenance and management plus control of accessible Web cites on the Internet. 50-3 to 50-10 are a variety of types of management units for implementation of the functionality of the illustrative information delivery server 50. On the other hand, there are database files of 50-11 to 50-17 in a way corresponding to these management units.

Arrangements of respective management units 50-3 to 50-10 will be described below. The guidance management unit 50-3 is the one that provides guidance as to event places and/or sightseeing spots by multimedia such as still images or moving or video images and further audio sounds. For instance, at amusement parks, also known as "thema" parks, it provides guidance as to detailed information to a user via the mobile information terminal 10 on a per-thema basis. At an art gallery or museum, it guides by multimedia the information concerning the painter of an art work, his or her personal background, artificial value of the era and others. Alternatively if at a sightseeing spot, it guides historical background and origin or else while commonly owning the value thereof. Guidance is done while substantially simultaneously getting access to a guidance database (DB) (50-11).

A position management unit 50-4 is the one that performs position management by use of a group DB (50-12) and user DB (50-16) plus land map DB (50-13). With the processing at the position management unit 50-4, there are a service for visually displaying a present position information over a land map in a manner such that they overlap each other, and a service for displaying position information of the same group on a map. Obviously it is also possible to perform guidance in a way corresponding to a present position being displayed on a map in cooperation with the processing of the guidance management unit 50-3.

A landmark management unit 50-5 is the one that performs management of landmarks by using the map DB (50-13) and landmark DB (50-14). The term "landmark management" as used herein may refer to an operation for managing and servicing information as to either a building structure or sight point which may become as a mark in maps in every information classification event--this may be carried out in known navigation systems in some cases. This landmark management service is convenient for determination of a place to be traveled or for execution of route search. Alternatively it may be arranged to demand a registration fee or request advertisement fee based on an access number of landmarks. The landmark management unit 50-5 further comprises landmark display function and landmark registration function along with landmark search function.

A route search management unit 50-6 is operable to perform route search processing from a present position up to a destination location and also search processing of a recommended route(s). During route searching, this unit performs it by using a land map DB (50-13) and history DB (50-15).

A situation/history management unit 50-7 performs processing of servicing to users the situation such as the degree of popularity and/or congestion of event places and sightseeing spots and further history information until now. For execution of this service, database files of a history DB (50-15) and/or user DB (50-16) will be used.

An individual or person management unit 50-8 is operable to perform processing for management of individual users and/or a group to which respective users belong. Each user may receive a variety of services by inputting a user identification (ID) and password in his or her first access event. Although in this embodiment the group DB (50-12) and user DB (50-16) are managed separately, it will be permissible that management is done by adding an item of group information into the user DB (50-16). The group information contains therein the title of a group, group ID, link data to members belonging thereto, by way of example.

An image management unit 50-9 is designed to upload an image or images as photographed by the mobile information terminal 10 to the information delivery server 50 and, adversely, download more than one image where necessary and further performs a printout service of a required image(s). Note here that when performing such printout services, it outputs to a printer 50-18 of the information delivery server 50 to thereby send by mail to the postal address of a requester or, alternatively, transfers an image to the terminal of a photo shop at an event place or sightseeing spot for permitting provision of a print service thereat.

A money collection management unit 50-10 performs money-imposing/charging tasks with respect to users and advertising entities in accordance with service forms and access information. Money charge methodology may include a method for renting the mobile information terminal 10 and then making a levy of a rental fee/charge thereof, a method for determining the amount of money based on an access number or the kind and/or content of a service provided and/or option(s), and a method for doing the same based on either an image file size or storage time period. Additionally in the case of utilization of the communication base station 20, there is a method for receiving a cash-back service from a communication carrier company while adding to its communication fee a service charge of the information delivery server 50. To do this, it will be necessary to leave a history of access situation in accordance with each information service.

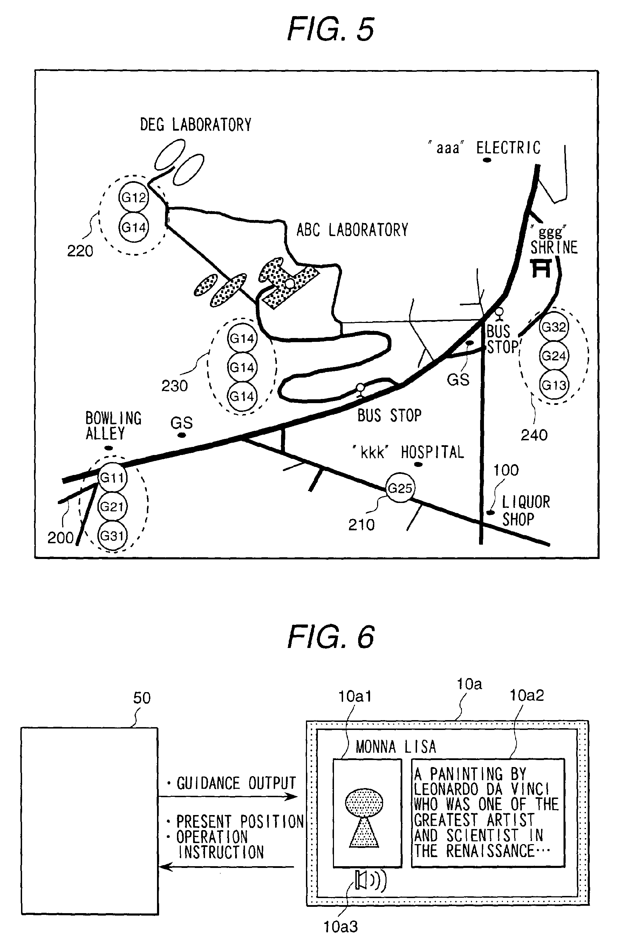

Figs. 4 and 5 are diagrams showing one typical application example of the multimedia information delivery system in the illustrative embodiment.

Fig. 4 is the one that shows a layout of an amusement or "thema" park, which is an event place 100. In Fig. 4, reference numeral "110" is used to designate an entrance of the thema park 100; numerals 120 to 150 denote thema halls or "pavilions" as established in the thema park 100; 200-240 each indicate a queue of people waiting for permission of entry to each thema pavilion. And, G11 to G14, G21-G25 and G31-G33 indicate certain individuals (mobile information terminal positions) who have mobile information terminals 10a-10n respectively, wherein G1X, G2X and G3X show that they are specific users who belong to the same group respectively. For example, it can be seen that people of the group G1X are acting individually at a thema hall 120, thema hall 140 and thema hall 150. Activities of other groups are similar thereto.

Fig. 5 is a diagram showing a land map of a sightseeing spot, wherein 200 to 240 denote the positions of mobile information terminals 10 at respective sightseeing spots. More specifically, 200 indicates a bowling alley; 210 is a "kkk" hospital; 220, DEG laboratory; 230, ABC lab; 240, shrine.

This embodiment is the one that is designed to perform information providing services as will be explained below to a user of a mobile information terminal whose position is presently recognized in a situation shown in Figs. 4 and 5.

An explanation will next be given of an outline of a service in the multimedia information delivery system in accordance with this embodiment. Note here that the degree of congestion and popularity in units of objects of events will be shown as an example of population distribution services.

Fig. 6 is a diagram showing an outline of service to be performed at the guidance management unit 50-3 by the relation of the mobile information terminal 10a versus information delivery server 50. The guidance management unit 50-3 is responsive to receipt of present position information as sent from the mobile information terminal 10 via the communication base station 20 and Internet 40 and an operation instruction being input to a display screen (LCD 10-8 and TB 10-7), for letting an image 10a1, text 10a2 and audio 10a3 (audible guidance is available upon instruction of an icon) corresponding to either the present position or the operation instruction be output from the information delivery server 50. At this guidance output processing, when the present position being sent from the mobile information terminal 10a becomes identical to a specified position present during this guidance or alternatively falls within a specified position range, guidance processing will be get started automatically or, alternatively, such guidance processing gets started at any given time point in accordance with the user's operation instruction irrespective of a present position as will be sent thereto.

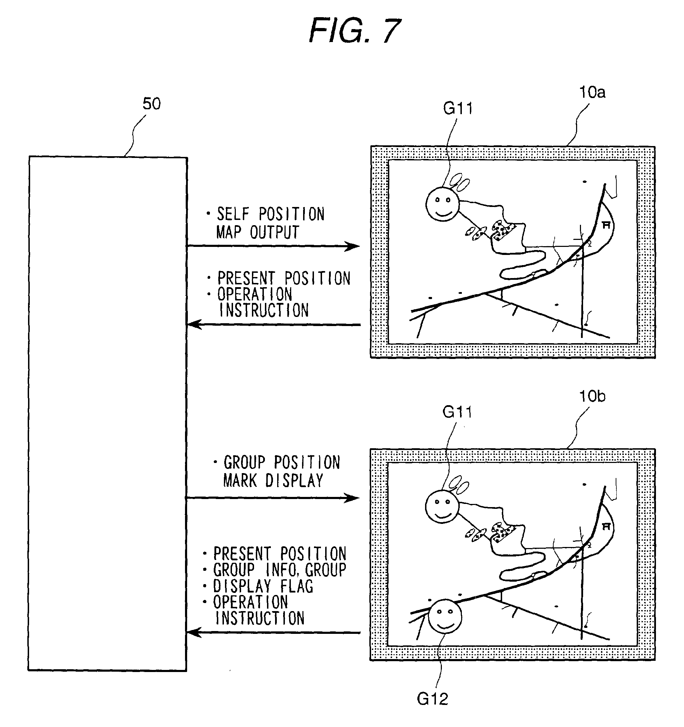

Fig. 7 is a diagram showing an outline of a service to be done at the position management unit 50-4. In case the mobile information terminal 10a sends to the information delivery server 50 both a present position and an operation instruction corresponding to this service, the information delivery server 50 operates to extract land map data of a region including a position indicated by position information being sent from the mobile information terminal 10a and then return to the mobile information terminal 10a image data indicating the position of mobile information terminal 10a on the land map that has been obtained through expansion of the map data thus extracted. At the mobile information terminal 10a an image with the self-position's mark G11 being mapped onto the land map is visually displayed on the display screen. Whereby, it is advantageously possible to prevent loss of a self-position and/or becoming as a lost child in the crowd.

On the other hand, at a mobile information terminal 10b, sending to the information delivery server 50 its present position and group information as well as a group display flag and operation instruction results in marks G11, G12 of positions of a group containing oneself being mapped on a land map, causing it to be displayed on the display screen of this mobile information terminal. Note here that it is possible to establish privacy by preventing this ID mark from being displayed when the group display flag is in the off state.

A group position service to be done in the example of the mobile information terminal 10b is such that it is also possible to provide such service only to specified individuals who belong to the same group. Due to this, for example, it is also possible by letting an aged person have the mobile information terminal 10 to provide a wondering old person's position specifying service such as acknowledging his or per location only to a family belonging to the same group. Additionally, detailed information will be displayed when letting a mouse pointer go to the group marks G11, G12 or alternatively upon clicking thereof. Alternatively it may also be arranged to change the mark display in accordance with a person or to offer a capability to register a mark dedicated to the individual's usage only. Still alternatively, it will also be possible that in case an increased number of people belongs to a group, a group list is displayed while permitting its mark to be displayed upon selection thereof.

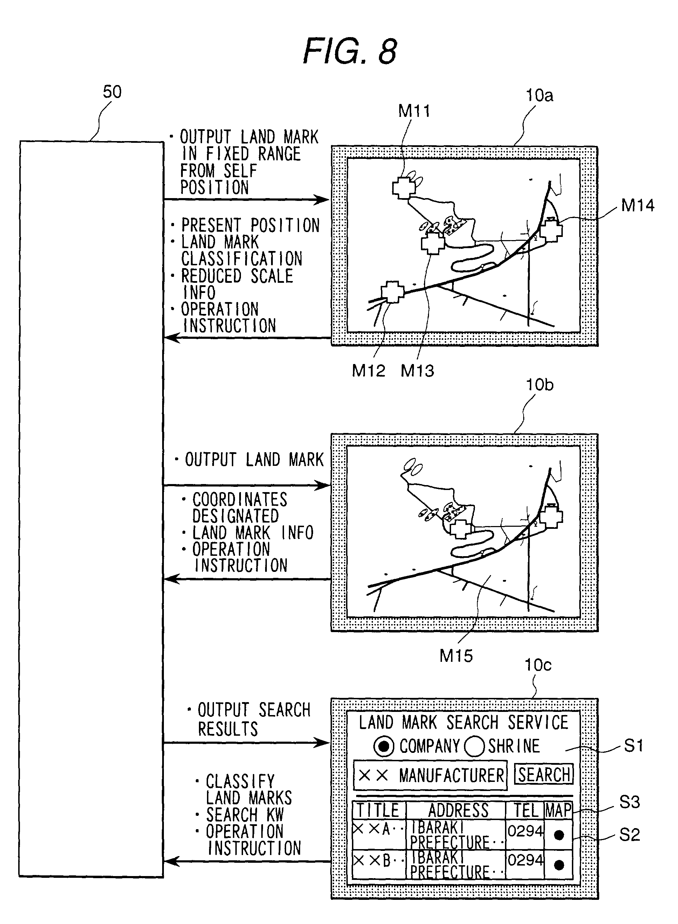

Fig. 8 is a drawing showing an outline of service to be performed at the landmark management unit 50-5. This shows that the mobile information terminal 10a is in the state that it is receiving a landmark display service. When the mobile information terminal 10a sends its present position and landmark classification along with scale information and operation instruction toward the information delivery server 50, certain landmarks M11 to M14 which fall within a fixed range from the self-position are mapped onto a land map and then displayed at the mobile information terminal 10a. Detailed information will be displayed when letting a mouse pointer be at landmarks M11-M14 or upon clicking thereof.

The mobile information terminal 10b shown herein is in the state that it is receiving a landmark registration service. With this service, when the mobile information terminal 10b sends to the information delivery server 50 several data including but not limited to designated coordinates, landmark information (classification, title, address, telephone number, a uniform resource locator (URL) of his or her home page, etc.) and operation instruction, landmark registration is registerable on a land map being displayed on the display screen of this mobile information terminal 10b. Useful access information may be obtained by registration of famous sightseeing spots, hotels, restraints, lavatories and others.

It should be noted that the landmark registration may be arranged to be done with a charge applied thereto while asking payment of a registration fee. Although the registration per se is possible through the Internet, admission of free registration can result in inferior information being also registered. In such case, it will be preferable that registration and information disclosure be done separately or, alternatively, a method is employed for granting registration based on an administrator's judgment after having received a mail for registration.

A mobile information terminal 10c shown herein is in the state that it is receiving a landmark search service. This service is the one that when the mobile information terminal 10c sends landmark classify/sort data and more than one search key word (KW) plus operation instruction to the information delivery server 50, a search engine being provided in the information delivery server 50 or linked thereto will be executed causing its search result(s) to be displayed on the display screen of the mobile information terminal 10c.

The illustrative example is the one that the landmark classification of "Company" and the search keyword (KW) of "XX Factory" (S1) are input resulting in search results being displayed as shown by S2. When instructing an item of MAP (3) in the search results of S2, its landmark will be map-displayed. The use of this search makes it possible to efficiently access many landmarks registered. Note that upon conduction of a search, if a search engine capable of offering "vague" searchabilities is utilized then the resultant usability will be increased because of the fact that results are obtainable even when any complete title is unavailable.

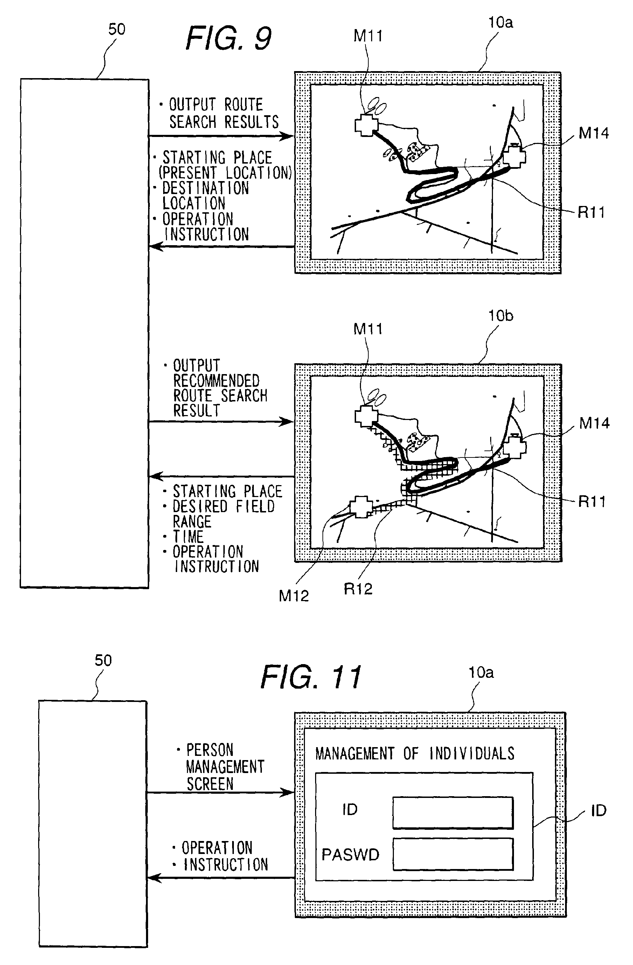

Fig. 9 is a diagram showing an outline of a service to be done at the route search management unit 50-6. The mobile information terminal 10a shown herein is in the state that it presently receives a route search service. This service is such that when the mobile information terminal 10a sends a starting location (present position) (M11) and destination location (M14) plus operation instruction to the information delivery server 50, a route search is carried out causing its route search results to be displayed on the display screen of the mobile information terminal 10a while marking (R11) in colors and/or forms that are readily recognizable by users. This route search function is principally the same as that performed in prior art car navigation systems. A difference in architecture of the former over the latter is that the intended route search is done by the information delivery server 50 in accordance with a request from a mobile information terminal(s) 10. Due to this, suppose that the information delivery server 50 has a performance capable of processing a plurality of requests from mobile information terminals 10.

The mobile information terminal 10b shown herein is in the state that it is receiving a recommended route search service. This service is such that when the mobile information terminal 10b sends a starting location (present position) (M11) and desired field along with a range (land map display range) and time plus operation instruction to the information delivery server 50, a recommendable route search is carried out causing its recommended route search results to be displayed on the display screen of the mobile information terminal 10b while marking (R11, R12) in colors and/or forms that are readily recognizable by users. Upon execution of such recommended route search, search is done based on popularity data and time in addition to conditions or criteria as input thereto. Note that in cases where a plurality of recommended routes are available, guidance may be done while adding thereto a course title. The course title is to be added by the system in accordance with a final land point and/or a turn point or else or alternatively the popularity.

Fig. 10 is a diagram showing an outline of a service to be done at the situation/history management unit 50-7. The mobile information terminal 10a is in the state that it is receiving a congestion service. This service is such that when the mobile information terminal 10a sends its present position and operation instruction to the information delivery server 50, the information delivery server 50 uses a plurality of position information items as received from other mobile information terminals 10 being received at such time point to calculate the degree of congestion at a predefined place (each thema hall if in a thema park) and then show it in a graphical form for output (Kon) to the mobile information terminal 10a. In the example shown in Fig. 10, reference numerals 120 to 150 correspond to titles of thema halls or "pavilions," showing that the thema hall 130 is full of people at the maximum degree. As an index or indicator of this congestion degree, relative percent (%) is displayed or alternatively a waiting time is displayed or, still alternatively, a number of people will be displayed.

The mobile information terminal 10b is in the state that it is receiving a popularity service. This service is such that when the mobile information terminal 10b sends information as to access to each guidance information along with operation instruction toward the information delivery server 50, the information delivery server 50 operates to calculate the degree of popularity and then show it in a graphical form for output (Best) to the mobile information terminal 10b. Here, it is required that the access information be employed while changing the weight thereof between then virtually getting access via the Internet (access information in units of virtual objects) and when accessing while actually going to such position (access information in units of real objects). More specifically the per-real object access information is higher in weight than the per-virtual object access information. Optionally it may also be possible to arrange so that the popularity is collected in the form of returning to the information delivery server those questionnaires predistributed via mobile information terminals 10 with respondents' comments being written thereinto.

The mobile information terminal 10c shown herein is in the state that it presently receives a history service. This service is such that when the mobile information terminal 10c sends access information such as time and date plus place along with operation instruction to the information delivery server 50, it outputs a history (Log) of position information obtained during activity in accordance with such access information. Upon clicking of a "time/date" icon in the Log as displayed on the display screen of the mobile information terminal 10c, a place to which a person has gone at such time on such day and will be displayed along with a nearby place map thereof, which will be preferably used by the person to put his or her diary and photographs in order after having gone home. Note here that in an image service as will be described below in the description, it will be useful for information rearrangement by simultaneously recording when each photograph is taken at which position.

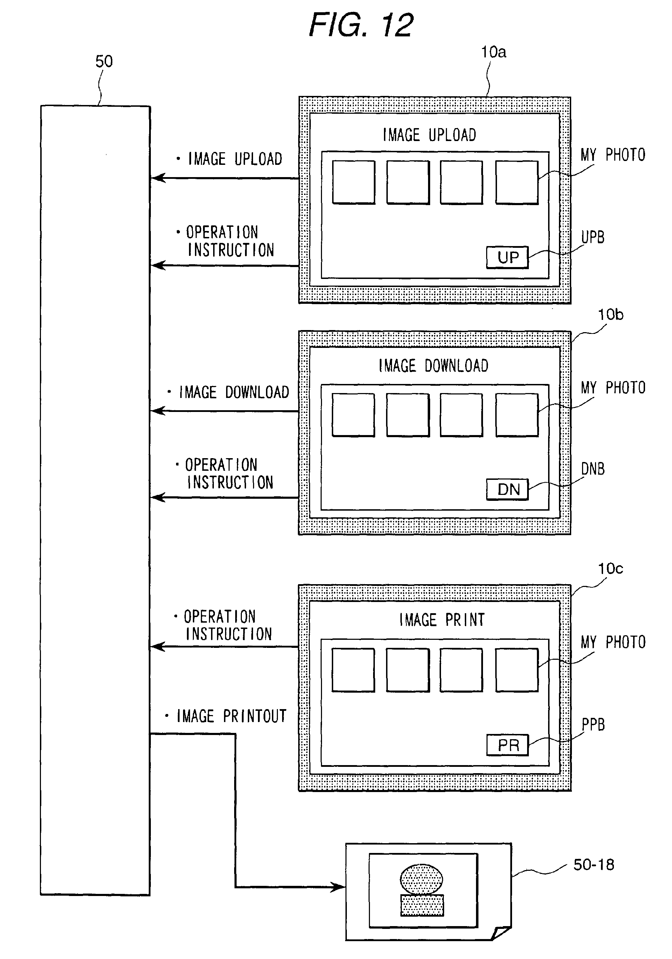

Fig. 11 is a diagram showing an outline of a service to be done at the individuals management unit 50-8. At the mobile information terminal 10a, this sends an ID and password (ID-PAS) to the information delivery server 50; if the ID and password sent via the information delivery server 50 are verified to be identical with preregistered ones, a variety of kinds of services will be received. Methodology for registration of individuals may include a scheme for permitting a user to do it on a registration screen, and a scheme for expecting a system administrator to issue an ID and password upon receipt of reservation. As previously stated, group registration may also be done at the individuals or "person" management unit 50-8. In this case a group name will be registered in Fig. 11: the group registration at the position management unit 50-4 will no longer be required.

Fig. 12 is a diagram showing an outline of a service to be done at the image management unit 50-9. The mobile information terminal 10a shown herein is in the state that it is receiving an image upload service. This service is a service that is for sending to the information delivery server 50 those images (Myphoto) as taken or accommodated by image pickup functionalities (CCD camera 10-5 and image input unit 10-6) of the mobile information terminal 10a through execution of an operation instruction of an upload button UPB which is set on the display screen of the mobile information terminal 10a and then permitting storage therein. Although in this example an explanation was given in conjunction with an example for uploading images as photographed by the mobile information terminal 10a, another arrangement may alternatively be employable for sending images as automatically taken by a camera installed in an event place to the information delivery server 50 for storage therein. Additionally, in case these images are sent to the information delivery server 50, photographing time and shooting places (coordinates) will also be sent together for storage at the information delivery server 50 along with the images, which will be utilized for user's record/rearrangement.

A mobile information terminal 10b shown in Fig. 12 is an example that is receiving an image download service. This service is a service that is arranged so that upon issuance of operation instruction of a download button DNB as set on the display screen of the mobile information terminal 10b, more than one image corresponding to the user ID will be able to be downloaded to either any mobile information terminal 10 or an Internet terminal 30 connected on the Internet. Additionally in view of the fact that an increased, length of time period is required to download all the images from the first one, an arrangement may be employed for initially displaying a photo-list or "thumbnail" image and thereafter receiving a selection instruction for selection of one of thumbnail images being presently displayed and then downloading only such selected image. A further available arrangement is that the selected image may be mailed to a destination address designated.

A mobile information terminal 10c shown in Fig. 12 is an example that is receiving an image printout service. This service is a service which is arranged so that upon issuance of an operation instruction of a print service button PRB as set on the display screen of such mobile information terminal 10c, a selected image or images will be printed and output at a printer 50-18. The printer 50-18 is, for example, the one that is connected to a terminal or else as disposed within a photo shop at an event place or sightseeing spot while permitting a user to directly receive. Alternatively it is also permissible to employ an arrangement that connects the printer 50-18 directly to the information delivery server 50. In this case, any photo prints will be mailed to an address preregistered in a way corresponding to the user IC or a newly designated address.

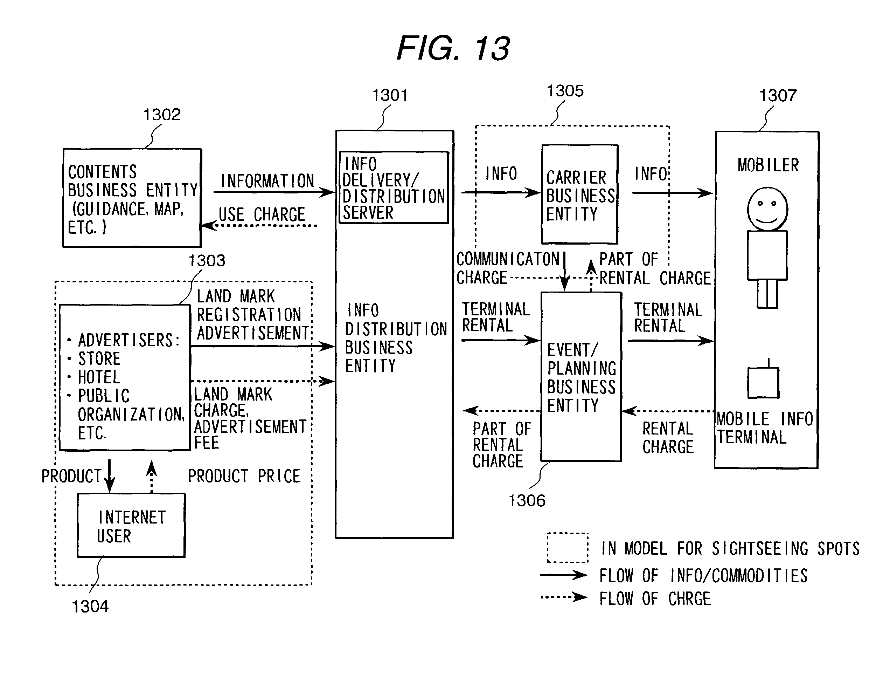

An explanation will next be given of an exemplary Internet business method, also called "business model" in some cases, utilizing the multimedia information delivery/distribution system in accordance with the embodiment, with reference to Fig. 13 below.

As shown in Fig. 13, a computer communications system preferably adaptable for use with the business model of this example is typically arranged to include an information delivery/distribution business entity 1301 which manages and handles the information delivery server 50 stated supra and several associate entities coupled together over communication links with the entity 1301 being as a net center, wherein they may include a contents business entity 1302, advertisers or "sponsors" 1303 such as shops, hotels, public organizations, etc., Internet users or subscribers 1304, carrier business entities 1305 for performing communications, business entities 1306 for performing events and/or planning, and more than one digital mobile tool user (say, "mobiler") 1307 who uses his or her mobile information terminal 10. Such arrangement may be variable on a case-by-case basis; for example, two separate business entities, such as a contents provider entity and information distributor, may exist as a single business entity.

It should be noted that the advertiser(s) 1303 and Internet user 1304 plus carrier provider 1305 are the ones as included in the business model example at a sightseeing spot(s), which will often be excluded in an example of an event place(s). In other words, in view of the fact that most event places are typically designed to employ locally installed "over-the-air" radiocommunications infrastructures (wireless LANs and/or private PHSs) therein, the carrier provider 1305 will no longer be required in some cases. On the other hand, with the business model example at an event place, there will not always be necessary several services of the service functionalities of the information delivery server 50 concerning landmark registration and search conduction.

In Fig. 13, arrows of solid lines are used to designate a flow of information and commodities whereas dotted line arrows denote money flows. The business model of this example employs a method for renting mobile information terminals 10 to the mobilers 1307 who become receivers of information delivery/distribution services while distributing rental charges among respective business entities involved.

More specifically, the information delivery business entity 1301 first rents one or more mobile information terminals 10 to the event/planning business entity 1306. Next, the event/planning business entity 1306 rents a mobile information terminal 10 to the mobiler 1307 and then charge a fee to use it, say rental charge. This rental charge is distributed among the event/planning business entity 1306, carrier business entity 1305 and information delivery business entity 1301 while the information delivery business entity 1301 pays an information use charge to the contents business entity 1302. On the other hand, a respective one of the advertisers 1303 pays landmark charge and advertisement fee for landmark registration and commercial advertisement activities. Additionally the individual Internet user 1304 is expected to pay a commodity purchase price to an advertiser 1303 once at a time whenever s/he purchases therefrom a commercially available product.

Several arrangements are also available other than the aforementioned business model example, one of which may be such that the mobile information terminal 10 to be rented is replaced by the mobiler 1307's own mobile information terminal (including a terminal with mobile radiotelephone or cellular phone functionalities) 10. If this is the case, there is a model in which the carrier business entity 1305 imposes a required charge as a communication fee, which will be distributed among respective business entities concerned. In the case of distribution, it is permissible that the total amount of charge is alterable depending upon the resultant number of information access events or alternatively the degree of congestion or popularity. One example is that much money may be distributed to those events with higher popularities. Optionally, an arrangement is employable for offering to repeaters a charge-off or "discount" privilege by application of mileage services or point services.

In addition, an arrangement may be employed wherein charging a fee such as a rental charge or communication fee to the individual mobiler 1307 is replaced by charging a fee in units of groups to which respective mobilers 1307 belong. Further, an arrangement may be used which permits a mobiler 1307 to make a monitor contract in advance with the information delivery business entity 1301 for unveiling access information concerning a traveling history of the mobiler 1307 and/or to-the-facility access information be laid open to the information delivery business entity 1301 to thereby perform either charged money cancel-out or discount.

Alternatively an arrangement may be employable for allowing a hotel or local tourist bureau to rent mobile information terminals to travelers. In this case, if such hotel or tourist bureau already has its own Web cite on the Internet then it may be arranged to add part or all of the functions of the above-stated information delivery server 50 to inside of such cite. Furthermore, an arrangement may be used, which is for providing the above-noted services while directly connecting mobile information terminals and its associative information delivery server together by use of wired or wireless radiocommunication schemes, public telephone networks, local area network (LAN) and wide area network (WAN), without via the Internet.

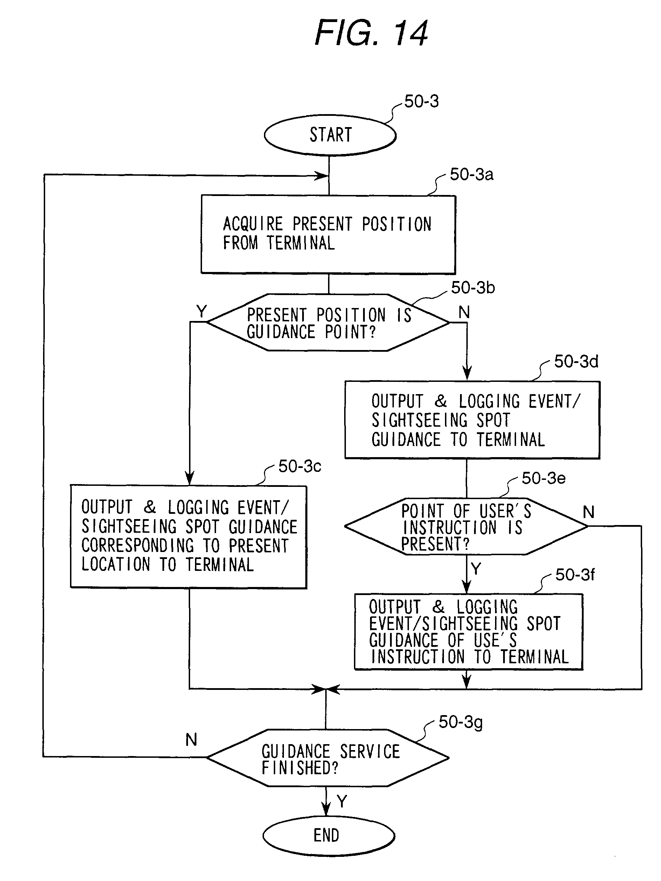

An explanation will next be given of a processing procedure for realization of the service functions to be done by respective management units of the information delivery server 50, with reference to Figs. 14 to 35 below.

Fig. 14 is a flow chart showing one example of a processing procedure or routine for realizing the service function of the guidance management unit 50-3. Acquire a present position from a mobile information terminal 10 (at step 50-3a). Judge whether the acquired present position is a predetermined guidance point (step 50-3b). While guidance points (coordinate positions) and guidance contents are combined together in a guidance table as provided within the guidance DB 50-11, judge based on whether the present position is identical to (actually, falls within a range of a fixed distance from) the predetermined guidance point (step 50-3b).

If coincidence is verified then output to the mobile information terminal event/sightseeing-spot guidance corresponding to the present position while at the same time performing "Logging" processing (step 50-3c). At the Logging processing, acquire from mobile information terminals 10 access information including count-up and time and data or else in units of users and in units of places of events/sightseeing-spots for prestorage on the guidance management unit 50-3 side for later utilization during popularity calculation and history services. This access information is stored as per-real object access information because the access has come at a real position. These access information items are for use with per-customer services and event guidance mails (what is called the "One To One" services).

While this Logging processing will also be used during processing procedures for realization of other service functions, its storage data may differ in units of processings. Practically, this Logging processing is for managing and handling the history of services as provided in order to determine the amount of charge required to each user; for example, the contents of services as provided in units of users will be accumulated along with the history thereof. Additionally, in cases where money charging is done based on a connection time length or service provision time period, an arrangement is employable for monitoring a time length during provision of a service and for determining on a real-time basis an amount of money for debiting the user through the Logging processing once at a time whenever each service providing session is completed.

Note here that an arrangement may be employed which is designed so that any guidance is not output immediately even upon occurrence of coincidence with the guidance point; alternatively, let the user pay attention by blinking a corresponding part of a land map being presently displayed on the display screen of mobile information terminal 10 or alternatively producing alarm sounds and, thereafter, the actual guidance output is performed after receipt of input of a user's instruction. Further, the contents of such guidance to be output are prepared in accordance with places and contents such as still images, video, audio sound/voice, etc.

At step 50-3b, if the present position acquired is not identical to the guidance point, then output to the mobile information terminal 10 the overall event/sightseeingspot guidance and/or a list of guidance items capable of being output; then execute the Logging processing (step 50-3d). For instance, if it is an event place then visually display a sketch map of an amusement park or "thema" park; if a sightseeing spot then let a sightseeing MAP (map) be displayed.

Next, judge whether there is a point instructed by the user (step 50-3e). This is for obtaining a desired point's guidance service even when the mobile information terminal 10 is absent at any guidance point. If a user's instruction is found at step 50-3e then output event/sightseeing-spot guidance at the instructed point to the mobile information terminal 10 and then execute Logging processing (step 50-3f). The process flow of from step 50-3d to step 50-3f will also be used when accessing from a terminal on the Internet. Note that since these accesses will be regarded as per-virtual object access information because of the absence at such position.

Lastly, judge whether there is an instruction for termination of this guidance service: if it is not to be terminated, then return to step 50-3a for again repeating the guidance guiding (step 50-3g).

Although prior art guidance services such as ones to be performed at museums or the like have been designed in most cases to utilize only audio-based guidance, with the multimedia information delivery or "broadcast" system of the illustrative embodiment, it becomes possible to deepen understanding of guidance objects because of the fact that this system is specifically designed to provide guidance guiding by multimedia including still images and video images or else. Furthermore, in accordance with this guidance services, it may serve just as an "electronic guide" due to the capability to let the mobile information terminal 10 provide appropriate guidance automatically in accordance with any traveled locations, not only when it is at event places and/or sightseeing spots but also while it is getting on a bus and/or in a motor vehicle.

Additionally, there is an effect that the contents for guidance are timely updatable by obtaining information from the contents business entity 1302 on the Internet. Furthermore, since the Logging processing is performed while distinguishing between whether the user of interest actually went to at such place or whether s/he virtually went thereto, there is an effect that a situation/history service as will be set forth later in the description can be made more precise.

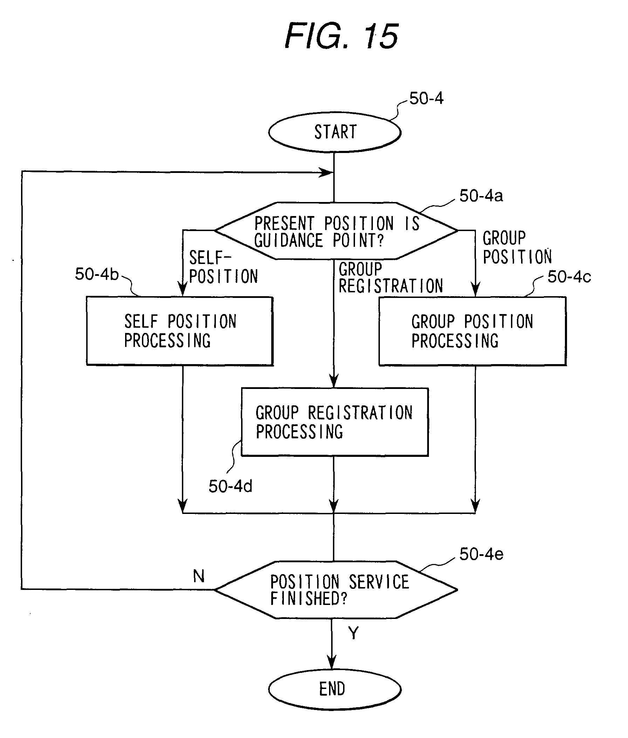

Fig. 15 is a flow chart showing an example of a processing procedure for realization of the service functionality of the position management unit 50-4. With this processing routine, the processing is subdivided into three parts depending on the kind of a service to be done. More specifically, judge the kind of a service corresponding to an operation instruction of an user as sent via a mobile information terminal 10 (step 50-4a): if it is a self-position service, then go to self-position processing (step 50-4b); if a group registration service then go to group registration processing (step 50-4d); if a group position service then jump to group position processing (step 50-4c). The above processing will be repeated until termination of this position service (step 50-4e).

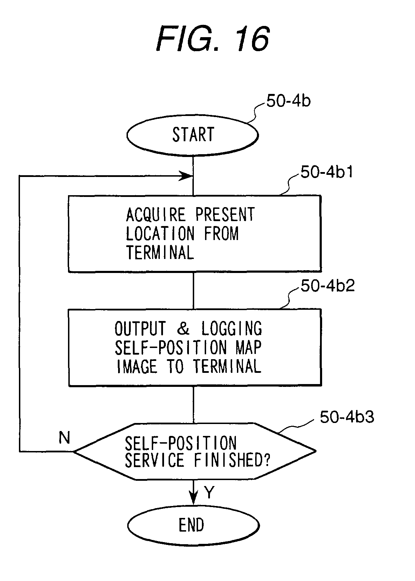

An explanation will next be given of the self-position processing 50-4b, group position processing 50-4c and group registration processing 50-4d, respectively. Fig. 16 is a flowchart for realization of the self-position processing 50-4b. With this processing, first acquire from a mobile information terminal 10 (step 50-4b1). Next, as shown in Fig. 7, output to the mobile information terminal a land map image indicative of the self-position and then perform Logging processing (step 50-4b2). This service is a service convenient when loosing a way to go. Note that the self-position is indicated by a cross mark or allow mark or the like. It will be repeated until termination of the self-position service is instructed (step 50-4b3).

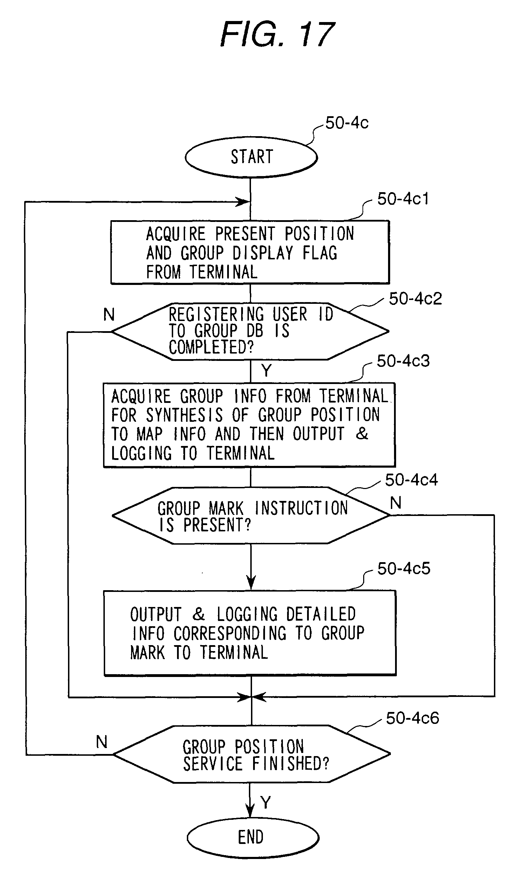

Fig. 17 is a flowchart for realization of the group position processing 50-4c. With this processing, fetch data indicative of the presence or absence of a present position and group display flag from the mobile information terminal (step 50-4c1). Next, judge whether an user IC as sent from the mobile information terminal has been registered in the group DB 50-12 (step 50-4c2). If it has not been registered then jump to step 50-4c7 because this service is unavailable. On the other hand, if it has already been registered then judge whether the group display flag is present or not (step 50-4c3). If no group display flag is found then prevent displaying in order to protect privacy and then go to step 50-4c7.

On the other hand, if the group display flag is found then acquire from the mobile information terminal group information such as a group name and group ID and then compose or "synthesize" one of group marks present in units of groups onto a land map image in order to indicate the position of each member who belongs to the group with the user ID having been registered and, thereafter, output such composite image to the mobile information terminal, followed by execution of Logging processing (step 50-4c4). Next, in order to know further detailed information, in case there is an instruction for selection of one or a plurality of ones from group marks, output to a mobile information terminal that has issued such selection instruction certain information that a member corresponding to the instructed group mark has been set as a commonly useable one; then execute Logging processing (step 50-4c5 to step 50-4c6). Lastly repeat it until termination of the group position service is instructed (step 50-4c7).

With this group position service, a present location of each member belonging to the same group is readily available, which in turn makes it possible to render contact and action readily understandable. For example, utilizing for school excursion trips in units of schools ("ABC" school group or the like) makes it possible to catch actions of individual students of the same school, which in turn is utilizable for preclusion of lost children or prevention of entry to dangerous land areas. Furthermore, by employing an arrangement for letting a wandering/roaming old person have a mobile information terminal that is group-registered together with others and for outputting his or her present location at regular intervals, it is advantageously possible for family members who own mobile information terminals registered to the same group to readily recognize the old person's present location. Additionally, when utilizing this service during car traveling, it is possible to become aware of a present location of each of land vehicles in which mobile information terminals belonging to the same group are installed, which in turn ensures that it is possible to have a drive with a group of associates, without any anxiety.

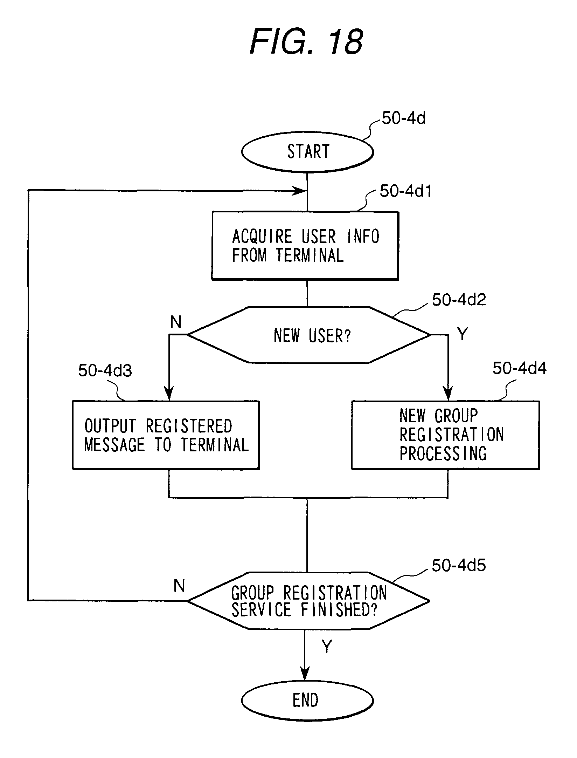

Fig. 18 is a flowchart for realization of the group registration processing 50-4d. With the group registration function, first acquire user information (group name, ID, etc.) that has been sent from a mobile information terminal (step 50-4d1). Next, judge whether it is a new user with respect to the group of interest (step 50-4d2); if new then perform new group registration processing (step 50-4d4). If nor new then output a message saying completion of registration to the mobile information terminal (step 50-4d3). Lastly judge whether the group registration service is to be terminated or not (step 50-4d5); if NO then repeat.

This service is for implementation of a position service of the same group. It is also possible to temporarily register only an event place or sightseeing spot or alternatively to register it continuously. Note here that upon temporal registration, such group registration is to be deleted when the mobile information terminal is returned back. When utilizing the group position service continuously, it may also be a good idea to increase a group position service fee. It will be preferable that the user is expected at the time of an application to select which one of the services is used.

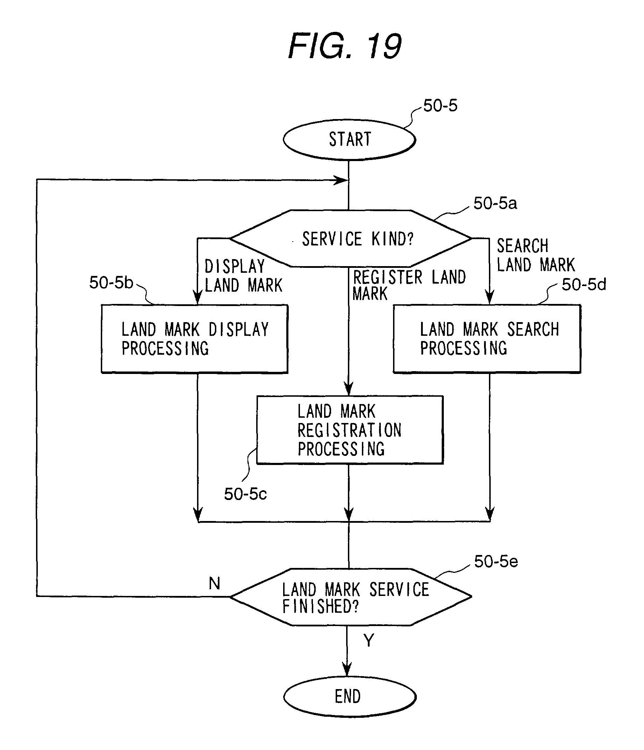

Fig. 19 is a flowchart showing one exemplary processing routine for realization of the service function of the landmark management unit 50-5. With this processing routine, the processing is divided into three parts depending on the kind of a service to be done. More specifically, judge the kind of a service required by an operation instruction of a user as sent via a mobile information terminal (step 50-5a): if it is a landmark display service, then go to landmark display processing (step 50-5b); if a landmark registration service then go to landmark registration processing (step 50-5d); if a landmark search service then jump to landmark search processing (step 50-5c). The above processing will be repeated until termination of the landmark service is instructed (step 50-5e). A procedure at each processing will next be explained below.

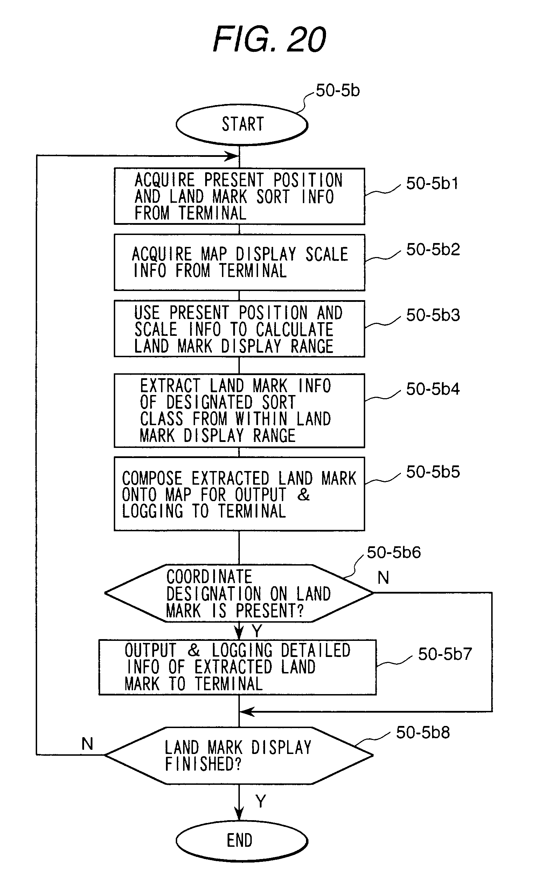

Fig. 20 is a flowchart for realization of the landmark display processing 50-5b. This processing starts with a step which acquires a present position and landmark classification information from the mobile information terminal (see step 50-5b1). Here, the "landmark classificatory information" is to be understood to mean the one that indicates a class or "category" of a facility corresponding to the landmark--for example, restraint, movie theater, amusement or "thema" park, etc. Next, acquire scale information used for land map display from the mobile information terminal (step 50-5b2). And calculate a landmark display range from the present position and scale information (step 50-5b3). On the other hand, within the landmark display range, extract landmark information in category being presently designated (step 50-5b4). Next compose the extracted landmark onto a land map and then output it to the mobile information terminal, followed by execution of Logging processing (step 50-5b5).

Next, judge whether either designation of coordinates on the landmark or designated of selection of a specific landmark is available from the user (step 50-5b6). If it is found then output detailed information of the designated landmark to the mobile information terminal and then execute Logging processing (step 50-5b7). Lastly judge whether termination of the landmark display is instructed: if it is not to be terminated then jump to step 50-5b1; then repeat (step 50-5b8).

In accordance with this landmark display service, this is the one that performs mark-displaying along with a variety of kinds of information items during position display services, which may be utilizable when investigating whether any "want-to-go" sightseeing spot is present at nearby locations. In addition, due to the serviceability of detailed information display obtainable through designation of a landmark(s), it is possible to make a reservation by calling a facility corresponding to the landmark or by getting access to a home page thereof. In particular, this is convenient for making reservations to hotels or eating houses. By applying Logging processing to access information available when the user requests detailed displaying of this landmark, it is possible to utilize as basic data for popularity calculation and/or advertisement fee calculation to be done at the information delivery server. Additionally, registering as landmarks specific icons prepared by advertisers makes it possible to further increase the value for use as advertisement. Registering such icons is done by a landmark registration services as will be set forth below.

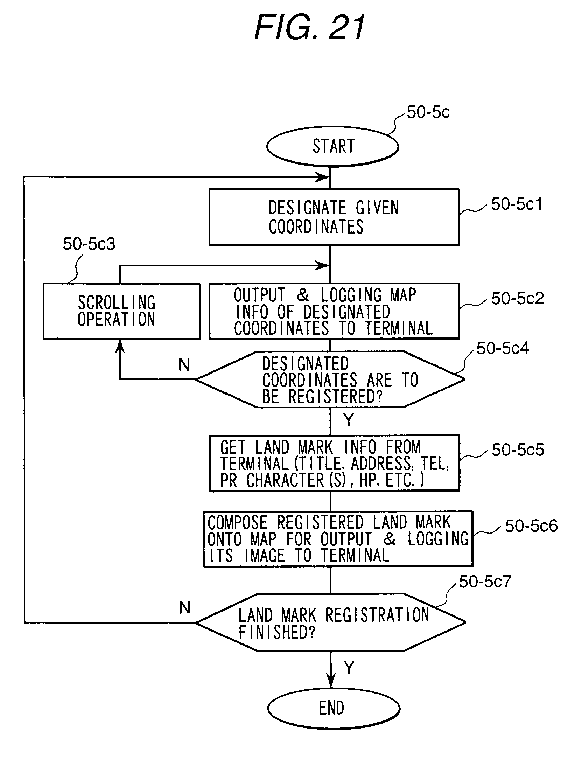

Fig. 21 is a flowchart for realization of the landmark registration processing 50-5c. With this processing, first designate given coordinates to call for a registration display screen (step 50-5c1). The given coordinates may alternatively be prior registered coordinates or coordinates of a landmark registration service to be described later or coordinates of a present location. Next, output to the mobile information terminal a land map image of an area including such designated given coordinate position and then perform Logging processing (step 50-5c2). Next, while having provided a setup position being fixed with respect to the display screen of the mobile information terminal, call for the user's confirmation to judge whether the coordinates corresponding to the setup position are the designated coordinates for registration of a landmark. If judgment is made to verify that the former is not the designated coordinates, then receive and accept an operation instruction for map scrolling via the mobile information terminal, and then output to the mobile information terminal a land map image obtainable when performing scrolling in accordance with this scroll operation instruction (step 50-5c3); thereafter, jump to step 50-5c2 for repeated execution of the same process until the designated coordinates are actually obtained.

In case the designated coordinates to be registered are obtained, acquire landmark information from the mobile information terminal (step 50-5c5). The landmark information may include the title of a landmark, address, telephone number, sentence for advertisement, URL of a home page to be linked, icon image for landmark, etc. A registration fee may be determined in accordance with the amount of information for publication. Next, compose the landmark to be registered onto a land map and then output its image to the mobile information terminal, followed by execution of Logging processing (step 50-5c6). Lastly, judge whether the landmark registration is to be terminated or not; if it is not to be terminated then jump to step 50-5c1 to repeat similar processing (step 50-5c7).

This landmark registration service is such that its conveniency is made higher especially by registration of certain places at which travelers stop, such as sightseeing spots, event sports, hotels or the like. Note however that unconditionally permitting whoever to do such registration can lead to occurrence of a difference from the real place, resulting in a decrease in credibility of landmark. To avoid this, it is necessary upon registration to formulate registrant information into a registration system or alternatively charge a fee for registrants to do it.

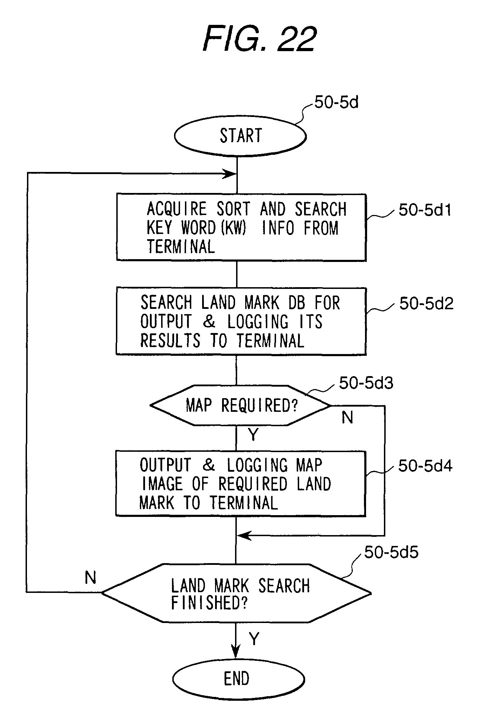

Fig. 22 is a flowchart for realization of a landmark search processing 50-5d. With this processing, first acquire from the mobile information terminal 10 both the class of a landmark to be searched and search keyword (KW) information (step 50-5d1). Next, based on these information items, search for a landmark DB 50-14 and output its results to the mobile information terminal 10 and then perform Logging processing (step 50-5d2). Next, the search results are usually list-output (see Fig. 8); then, judge whether a request for land map displaying is found (step 50-5d3). If such request is present then output a map image of such landmark to the mobile information terminal for execution of Logging processing (step 50-5d4). Lastly, judge whether the landmark search is to be terminated or not; if it is not to be terminated then go to step 50-5d1 to repeat searching (step 50-5d5).

Upon execution of landmark search, it should be required that the intended search can be done from a variety of angles. For instance, it is designed to offer searchabilities by using any kinds of keywords such as classification, title, address, telephone number, sentence for advertisement and the like. It also be designed to offer search narrowing capabilities. With such arrangements, it is possible for users to do searching by use of any keywords as promptly taken into their heads, which in turn increases convenience properties.

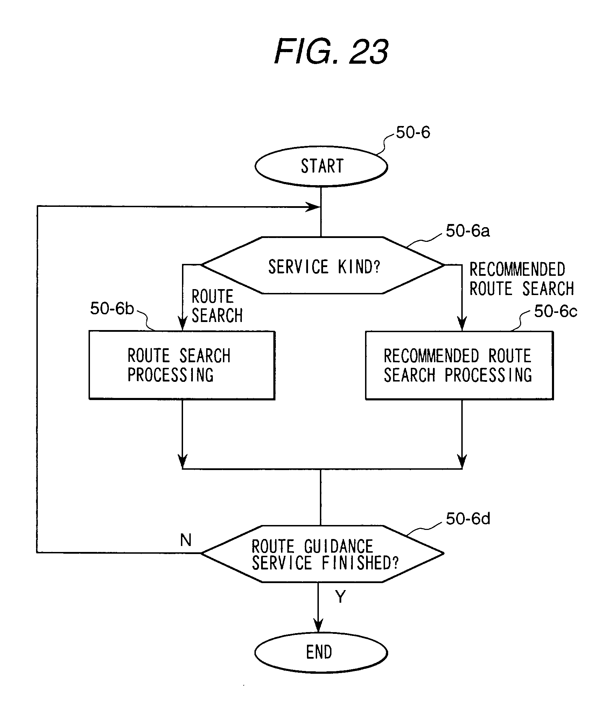

Fig. 23 is a flowchart showing one exemplary processing routine for realization of the service function of the route search management unit 50-6. With this processing routine, the processing is subdivided into two parts depending on the kind of a service to be done. More specifically, judge the kind of a service requested by a user based on his or her instruction as sent via a mobile information terminal (step 50-6a): if it is a route search service, then go to route search processing (step 50-6b); if a recommended route search service then jump to recommended route search processing (step 50-6c). The above processing will be repeated until entry of an instruction for termination of the route search service (step 50-6d). Each processing routine will next be explained below.

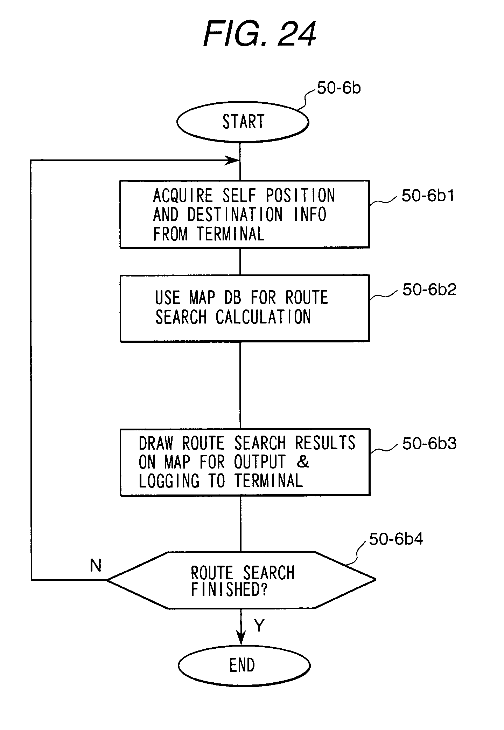

Fig. 24 is a flowchart for realization of the route search processing 50-6b. With this processing, first acquire a self-position and destination location information from a mobile information terminal (step 50-6b1). Next, utilize the landmark DB 50-13 to perform route search calculation (step 50-6b2). Methodology of this route search calculation is such that any method which is the same as route search calculation methods being carried out in prior known navigation systems may be employed, although not specifically limited thereto in the present invention. Next, draw a route search result onto a land map (using colors visually distinguishable from a background color) as shown in Fig. 9 by way of example and output it to the mobile information terminal and then execute Logging processing (step 50-6b3). Lastly judge whether the route search is to be terminated or not; if it is not to be terminated then go to step 50-6b1 to repeat similar processing (step 50-6b4).

Although this route search service is the one that achieves the route search function in prior known navigation systems, the service is different therefrom in arrangement for realizing its route search function. More specifically, any mobile information terminals in this embodiment are provided with no land map databases--the map databases are provided in the information delivery server 50. Due to this, when compared to prior art navigation systems with built-in map databases, it is possible to always store the newest or "up-to-date" information, leading to an advantage of achievement of excellent maintenance properties.

Furthermore, with the mobile information terminals in accordance with this embodiment, there is a merit in that the mobile information terminals are configurable at low production costs because of the fact that any compact disc read-only memories (CD-ROMs) or digital versatile disk (DVD) drives are no longer required for constitution of the land map databases. Additionally, although the mobile information terminals of this embodiment do require a communication fee for receipt of land map data, such communication fee may be reduced by letting a land map of a travel route searched be "cached" in the memory of a mobile information terminal (when looking at from the information delivery server side, the travel route map is sent to the mobile information terminal).

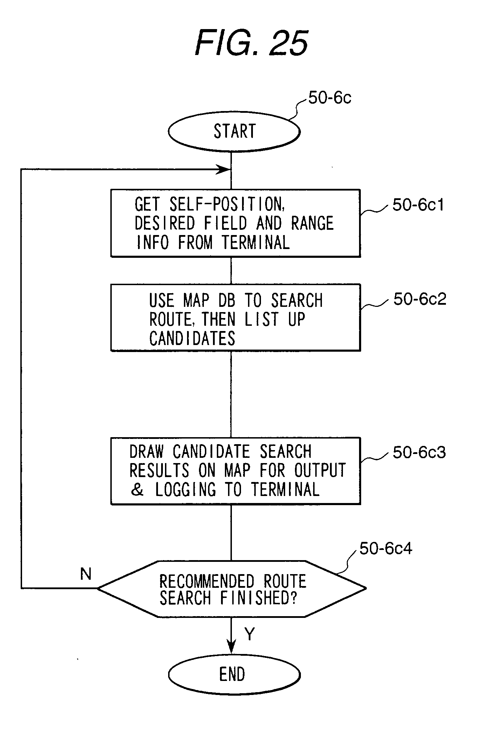

Fig. 25 is a flowchart for realization of the recommended route search processing 50-6c. With this processing, first acquire from a mobile information terminal certain information to be considered when conducting a search, such as a desired field (museum course, sightseeing spot course, etc.), range (e.g. a 10-km zone), an estimate and/or time or else (step 50-6c1). Next, utilize the land map DB 50-13 to conduct a search for more than one route that satisfies input conditions or criteria and then list up candidates (step 50-6c2). Additionally, upon calculation of recommended route search calculation, conducting the route search with the degree of popularity and/or congestion of sightseeing spots or event places makes it possible to increase resultant service quality. Accordingly, it may also be designed so that search conditions concerning the popularity and/or congestion degree are also input from the mobile information terminal.

Next, draw such candidate search results onto a land map with different colors applied thereto and then output them to the mobile information terminal and thereafter execute Logging processing (step 50-6c3). Note here that although in this example the candidate search results are drawn and composed onto the land map, it may alternatively arranged so that a list of candidates is output to the mobile information terminal and, after designation of the list, the map is output to the mobile information terminal. An arrangement is also employable which is such that several information items such as the popularity, congestion, required time length, distance and the like are added to the candidate list for use as criteria for course selection. Furthermore, when equivalent to a recommended spot a user per se or other users have pre-registered, an arrangement is employable for adding such information to the above-noted candidate list. Lastly judge whether the recommended route search is to be terminated or not; if it is not to be terminated then jump to step 50-6c1 to repeat similar processing (step 50-6c4).

This recommended route search is such that course selection is left to the information service provider side, which will be convenient when first visiting such event place or sightseeing spot. Further, selecting one from the courses of the recommended route search results makes it possible to realize navigation functionality for indicating a forward traveling direction once at a time whenever reaching a traffic intersection or else, as in known navigation processings. Except for the recommended route search, route searches may be conducted in a way such that certain search conditions may be added to ensure pass-through of recommendable spots the user per se or other users have preregistered or other given spots.

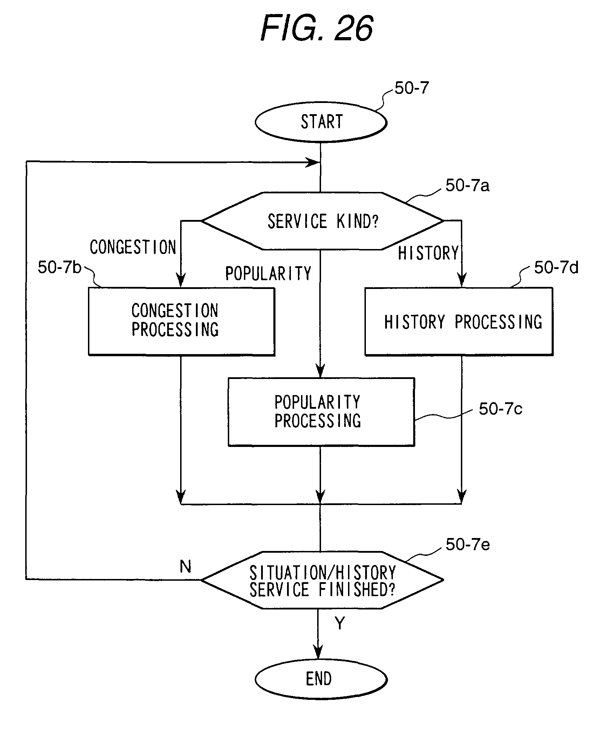

Fig. 26 is a flow chart showing an exemplary processing procedure for realization of the service function of situation/history management unit 50-7. With this processing routine, the processing is subdivided into three parts depending on the kind of a service under request. More specifically, judge the kind of a service indicated by an operation instruction of a user as sent via a mobile information terminal (step 50-7a): if it is a congestion degree service, then go to congestion processing (step 50-7b); if a popularity service then go to popularity processing (step 50-7c); if a history service then jump to history processing (step 50-7d). The above processing will be repeated until termination of the situation/history service (step 50-7e). A respective processing routine will next be explained below.

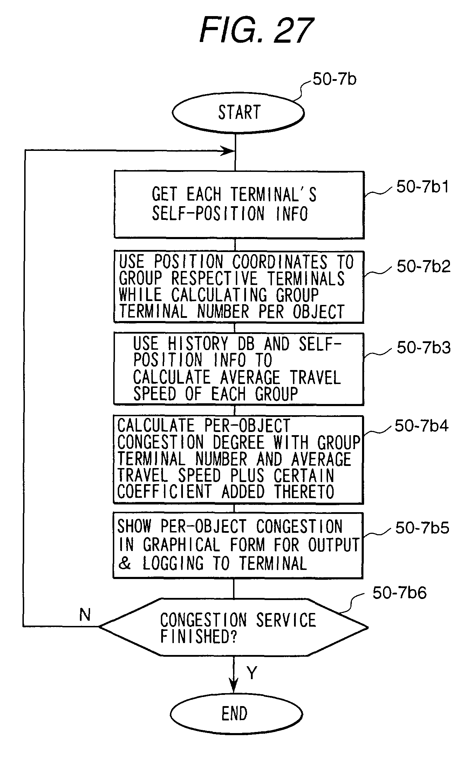

Fig. 27 is a flowchart for realization of the congestion processing 50-7b. Firstly acquire self-position information of each mobile information terminal (step 50-7b1). Apply grouping to each mobile information terminal by using coordinates corresponding to the self-position thus acquired; then, calculate a number of mobile information terminals as included in a group per facility of interest (step 50-7b2). This calculation enables setting of groupings as shown by 200 to 240 in Figs. 4 and 5. Practically, such grouping will become possible by combining those mobile information terminals existing at mutually nearby locations into a single group. And compare a coordinate position corresponding to the group thus set up with the coordinate position of preregistered facility to thereby presume or estimate specific facility of interest whereat members of this group are entering or waiting for admission to enter. Next, calculate the average moving speed of respective members from the history DB 50-15 and the self-position information of each mobile information terminal presently acquired (step 50-7b3). The moving speed of each mobile information terminal is obtainable from differences of respective ones of the distance and time of history position information and will be obtained by averaging moving speeds of respective individuals who belong to the same group.

Next, calculate the degree of congestion in units of "object" facilities while adding the mobile information terminal number of each group, average moving speed, and further prespecified coefficient (step 50-7b4). One example is that the density of terminals per object facility is obtainable from the mobile information terminal number per object facility with respect to the total number of mobile information terminals in a thema park. The greater this terminal density, the greater the resultant congestion degree. On the other hand, if the average moving speed is less in value, it will also be possible to judge so that it is full of people. Further, adding for consideration the prespecified coefficient is necessary because the mobile information terminal number is not necessarily limited to 1 piece per person. Next, graphically represent the congestion degree per object facility for output to the mobile information terminal (see Fig. 10); then execute Logging processing (step 50-7b5). Lastly judge whether the congestion service is to be terminated or not; if it is not to be terminated then jump to step 50-7b1 to repeat similar processing (step 50-7b6).

As apparent from the foregoing, in the case of an amusement or "thema" park by way of example, presentation of the congestion degree enables users to be aware of which thema hall is presently full of people on a real-time basis, which in turn permit them to go to other thema halls that are not crowed. In addition, the congestion service in accordance with this embodiment is applicable not only to the case of thema park but also to any cases where a plurality of enterable facilities are available within a specific land area or region, one practical example of which is such that it is possible to calculate the degree of congestion per conveyance in a recreation ground or alternatively the degree of congestion or else per shop or per restraint at a shopping center.

It is also possible to indicate which road is presently crowed by installation of a mobile information terminal into a land vehicle for setting up the above-stated grouping in units of roads and then calculating the average traveling speed and/or congestion degree. Due to this, it is possible for a vehicle driver who is the user of the mobile information terminal of this embodiment to select any not-crowded travel route upon conducting of a route search.

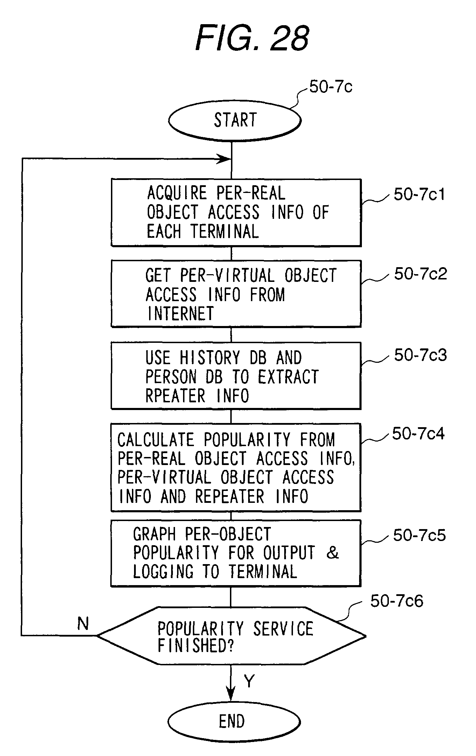

Fig. 28 is a flowchart for realization of the popularity processing 50-7c. Firstly acquire per-real-object access information of each mobile information terminal (step 50-7c1). This access information is typically obtainable when the user actually reach such object facility or location. Next gain per-virtual-object access information in the case of getting access to more than one terminal on the Internet or alternatively a Web cite or cites on the Internet concerning either the object facility or location without actually going to such object facility or location or still alternatively information such as information providing services utilizing FAX's automatic responses (step 50-7c2). Next, use the history DB 50-15 and/or individual's ID to extract repeater information, which is the information indicating that the same information has been accessed many times repeatedly (step 50-7c3).

Next, calculate the degree of popularity through weighted averaging using certain weight coefficient of the above-obtained per-real-object access information and per-virtual-object access information plus repeater information (step 50-7c4). Next graph and output the popularity degree in units of object facilities to the mobile information terminal and then execute Logging processing (step 50-7c5). Lastly judge whether the popularity service is to be terminated or not; if it is not to be terminated then jump to step 50-7c1 to repeat similar processing (step 50-7c6).

This popularity service is a measure useful for newcomers or beginners. Additionally an arrangement may also be employed for proposing a route in view of this popularity when conducting recommended route searches.

Except for the popularity service stated supra, those services are also available by using individuals' position information as will be presented below. First, by processing the people's position information based on the distinction of time zone, date, month, region, age and male/female, several services are realizable including but not limited to (1) a population migration distribution service showing how people has moved, (2) a mobilized people number service at either outdoor or "open-air" music event places or thema parks, (3) area-distinct departure population distribution service, and (4) age/sex-distinct departure population distribution service.

The information noted above may be used as marketing information or alternatively as basic information of a variety of plans such as shop plan, traffic plans, etc. These information items as to population distribution may also be provided to member-registered business enterprises, public and/or individuals with a charge required therefor. It will also be possible to monitor or "watchdog" the population distribution for a fixed length of time period or a change in population distribution based on previously reserved monitoring information for servicing such information.

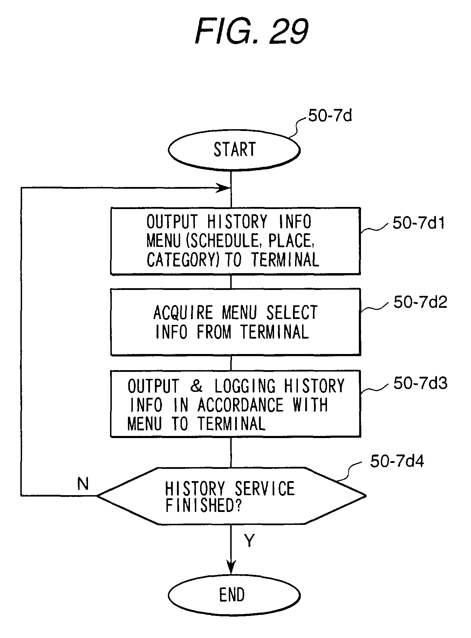

Fig. 29 is a flowchart for realization of the history processing 50-7d. With this processing, first output a history information menu (schedule, place, classification, etc.) shown for example in Fig. 10 to the mobile information terminal (step 50-7d1). Next, acquire menu select information from the mobile information terminal (step 50-7d2). Next, output history information pursuant to a selected menu to the mobile information terminal and then execute Logging processing (step 50-7d3). Lastly judge whether the history service is to be terminated or not; if it is not to be terminated then jump to step 50-7d1 to repeat similar processing (step 50-7d4).

This history service is the one that services the history of events and/or sightseeing spots to which a user having the mobile information terminal of this embodiment has visited in the past, which service will be utilized when rearranging photographs later or when recording sentences or alternatively for preparation of his or her next travel plan. Further, it will be preferable that this history service be arranged not only to enable access from the mobile information terminal but also to enable access by use of the same user's ID by way of example even when the user who owns the mobile information terminal wants to utilize an Internet terminal at his or her home or other Internet terminals.

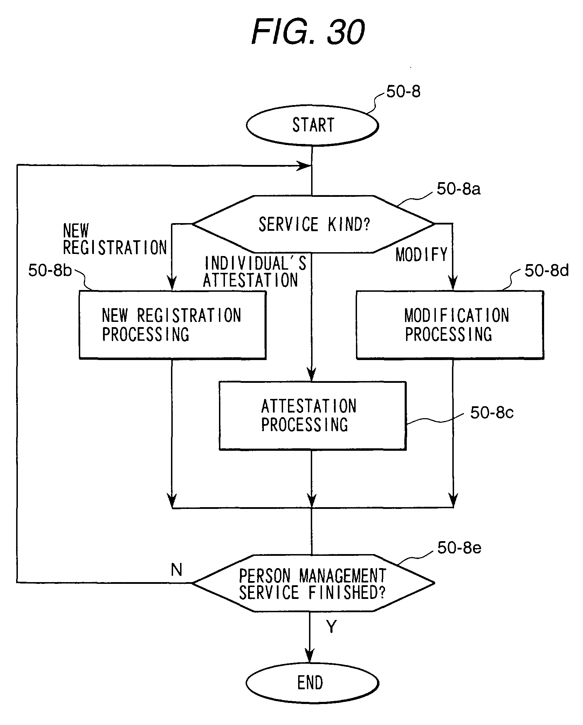

Fig. 30 is a flowchart showing an example of a processing procedure for realization of the service function of the individuals or person management unit 50-8. With this processing routine, the processing is subdivided into three parts depending on the kind of a service requested. More specifically, judge the kind of a service indicated by an operation instruction of a user as sent via a mobile information terminal (step 50-8a): if it is a new registration, then go to new registration processing (step 50-8b); if a person attestation then go to person attestation processing (step 50-8c); if a change or modification then jump to modification processing (step 50-8d). The above processing will be repeated until termination of the individuals management service is instructed (step 50-8e).

This person management service is the one that handles and manages individuals' IDs and passwords and thus is inevitable for identification of individuals and further for history management on a per-person basis. In addition, this is an essential function for the so-called "One to One" services which are for providing services in a way corresponding to a request from each individual person. With this embodiment, its practical processing routine should not be limited to the above scheme if it is possible to perform new individual registration and issuance of a person ID and password at the new registration processing (step 50-8b), attestation of an individual's ID and password as sent from a user at the person attestation processing (step 50-8c), and alteration of a password or else at the modification processing (step 50-8d)--for example, individuals management processing similar to prior known individuals management schemes such as member registration to Internet service providers may also be employed.

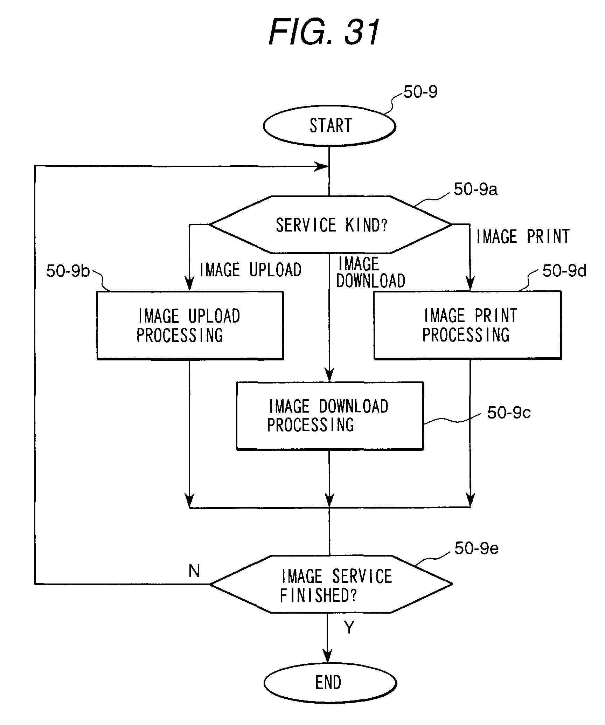

Fig. 31 is a flowchart showing an exemplary processing routine for realization of the service function of the image management unit 50-9. With this processing routine, the processing is subdivided into three parts depending on the kind of a service. More specifically, judge the kind of a service in accordance with a user's operation instruction as sent via a mobile information terminal (step 50-9a): if it is an image upload, then go to image upload processing (step 50-9b); if an image download then go to image download processing (step 50-9c); if an image printout then jump to image print processing (step 50-9d). The above processing will be repeated until termination of the individuals management service is instructed (step 50-9e). Each processing routine will next be explained below.

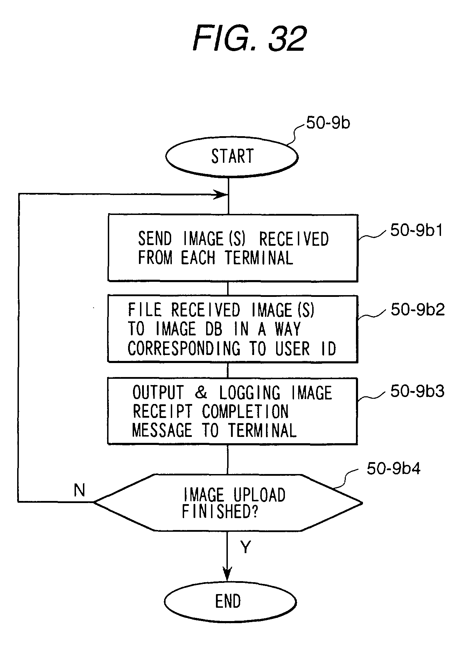

Fig. 32 is a flowchart for realization of the image upload processing 50-9b. With this processing, first receive an image that has been sent from each mobile information terminal with image data stored therein as shown in Fig. 12 (step 50-9b1). Next, perform filing such received image in the image DB 50-17 in a way corresponding to each user ID of the mobile information terminal from which the image data has been sent (step 50-9b2). Next, output an image receipt completion message to the mobile information terminal and then perform Logging processing (step 50-9b3). Lastly judge whether the image uploading is to be terminated or not; if it is not to be terminated then jump to step 50-9b1 to repeat similar processing (step 50-9b4).

This image upload service is the service that files any user's photographed images in the information delivery service, which will be used for to-be-later-described image download service and/or image print service or the like. Note here that upon providing the image upload service, an arrangement may also be employed which incorporates a method including the steps of visually displaying a thumbnail image on a mobile information terminal display screen, requesting a user to select only those images need to be uploaded, and then uploading such selected images only.

Note here that although the upload image is the one photographed from the user's mobile information terminal, the present invention should not be limited to this example. For example, in place of the use of a CCD camera provided at the mobile information terminal, more than one camera installed in facility within an event place or thema park is used to automatically shoot subjects or scenes to provide photo images, which will be uploaded periodically. In this case, it is difficult to identify any individual photographed; to avoid this, an arrangement may be employed which is for assigning a group ID in a way corresponding to such photo-shooting place, filing images together, permitting the individual user to later select from among the filed images certain image(s) at least partly containing therein his or her figure, and then downloading such selected image(s). Additionally, in the case of auto-photographing using the facility's camera, an arrangement may also be employed for setting up a temporary password and for filing images along with such password.

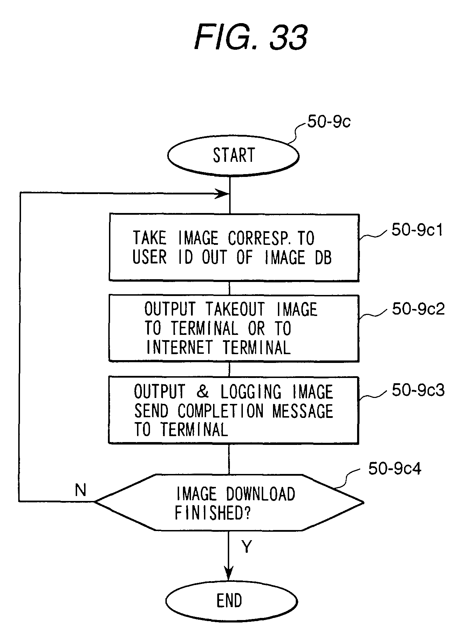

Fig. 33 is a flowchart for realization of the image download processing 50-9c. With this processing, take out of the image DB 50-17 an image corresponding to a user ID of either a mobile information terminal that has sent an operation instruction for image downloading or an Internet terminal (step 50-9c1). Next, output the extracted image to either the mobile information terminal or the Internet terminal (step 50-9c2). Next, output an image send completion message to the mobile information terminal and then execute Logging processing (step 50-9c3). Lastly judge whether the image downloading is to be terminated or not; if it is not to be terminated then jump to step 50-9c1 to repeat similar processing (step 50-9c4).

This image download service is for use when downloading an image or images to the user's mobile information terminal in event places or at sightseeing spots (may be serviced in the form of magnetic files) or alternatively when downloading to the Internet terminal. At the step 50-9c1, an arrangement may also be employed for first outputting a thumbnail image, allowing the user to select an image(s) to be downloaded, and them actually downloading such selected image(s). With such an arrangement, it is possible to reduce a communication fee or charge otherwise required for downloading of unnecessary images.

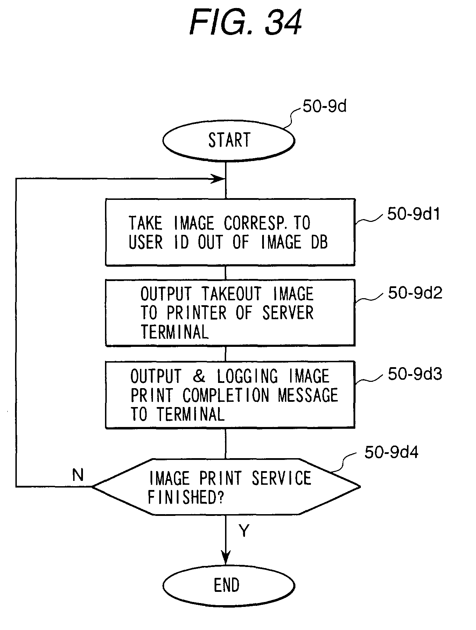

Fig. 34 is a flowchart for realization of the image printout processing 50-9d. With this processing, first take out of the image DB 50-17 an image that corresponds to the user ID of interest (step 50-9d1). Next, output such extracted image to either the information delivery server or a printer 50-18 of a printout-exclusive terminal as installed at an event place or sightseeing spot (step 50-9d2). Next output an image print completion message to the mobile information terminal and then execute Logging processing (step 50-9d3). Lastly judge whether the image printout is to be terminated or not; if it is not to be terminated then jump to step 50-9d1 to repeat similar processing (step 50-9d4).

This image print service is such that printout may be done at a printer machine as connected to the terminal of a photo shop in the event place or sightseeing spot. Also note that at the step 50-9d1, a thumbnail image is first displayed permitting the user to make selection and thereafter image printout is actually done, thereby reducing a communication fee or charge required.

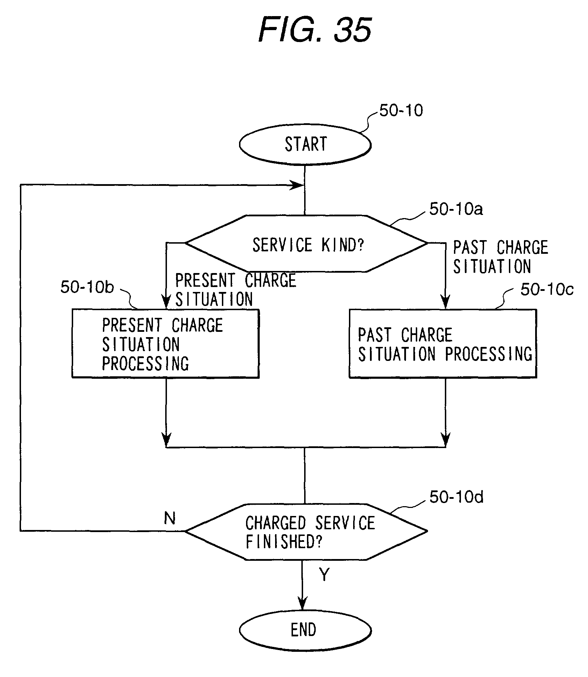

Fig. 35 is a flowchart showing one exemplary processing routine for realization of the service function of the money-impose/charge management unit 50-10. With this processing routine, the processing is subdivided into two parts depending on the kind of a service. More specifically, judge the kind of a service indicated by the user's operation instruction as sent via a mobile information terminal (step 50-10a): if it is a present charge situation, then go to present charge situation processing (step 50-10b); if a past charge situation then go to past charge situation processing (step 50-10c). The above processing will be repeated until termination of the charge management service is instructed (step 50-10d).

At the present charge situation processing (step 50-10b), a money-charge situation at a present session is calculated in the state of receipt of service provision after startup of a present access, wherein the charge situation thus calculated will be output to the mobile information terminal 10. Here, suppose that money charge is done in accordance with a connection time period at the present session, the amount of information being sent or received or the contents of a service being provided, and then its accumulation is calculated. Additionally at the past charge situation processing (step 50-10c), the situation of charged money up to a previous day, for example, is calculated or accumulated for output to the mobile information terminal 10.

This money-charge service is a service for checking for either optional services or amount-based or "pay-per-data" money charge situation other than a rental fee of a mobile information terminal for rental use and then notifying it to the user. For example, it is a service that permits inquiry about a presently charged money amount at any time required on a real time basis in cases where the communication charge is determined on a per-data basis in excess of a predefined length of time period while letting the image upload be of such pay-per-data charging system in accordance with a size if it is greater than a fixed size and, further, in case image printout is also made optional. This present charge situation service will also be effective in the case of using the user's mobile information terminal(s). Additionally data of the charge service is calculated from Logging processing data. In addition, payment of a charge required will be done by means of pay-in-cash or payment via postal transfer from a card or the like.

The above flowcharts are the ones that describe services provided and executed by the information delivery server 50. On the other hand, the mobile information terminal 10 is operable to perform the following processing. More specifically, at the mobile information terminal 10 (see Fig. 2), it performs several processing tasks including but not limited to 1) processing for monitoring operation instructions to the coordinate input unit TB 10-7, 2) present position detection processing by GPS 10-9 and position detector unit 10-4, 3) image input processing by CCD camera 10-5 and image input unit 10-6, 4) display processing and audio processing for performing multimedia guidance by LCD 10-8 and speaker 10-10, and 5) Web processing for getting access to the Internet.

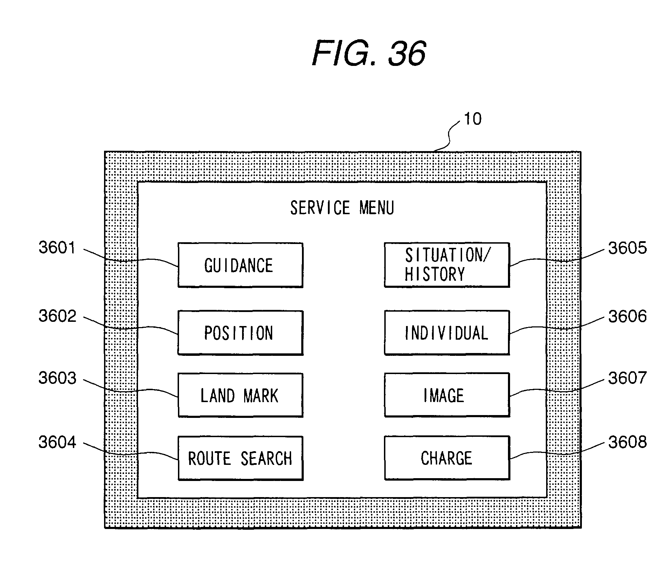

The mobile information terminal 10 displays a service menu shown in Fig. 36 for example for presentation to the user button regions 3601-3608 corresponding to service functions of respective management units 50-3 to 50-10 whereby it mainly is in charge of the man-machine interface section which enables the user to utilize any given service function while provision of service functions are realized by the information delivery server 50.

Note that the processing upon receipt of each service is assumed to be done in the form corresponding to the processing routines (see Figs. 14 to 35) for realization of the service functions as performed by the above-noted information delivery server 50. With a typical example of this embodiment, the mobile information terminal is designed to first send to the information delivery server 50 the title of a service the user requests and his or her own present position, then accept data indicative of a service content being automatically generated at the information delivery server 50 in accordance with the present self-position and sent thereto, and then output the data from either the display screen (LCD 10-8) or the speaker 10-10.

Although in the explanation of the multimedia information delivery/distribution system in accordance with this embodiment the event/sightseeing-spot has been described as an example, the principles of the present invention may also be used for applications other than this example. More specifically, due to the multimedia information delivery system for providing multimedia guidance by use of position information of more than one mobile information terminal, it is possible to permit a bus travel company to utilize the multimedia guidance service shown in Fig. 14 as an electronic guidance system for subsidiary utilization of bus guides or, alternatively, utilize the group position service shown in Fig. 17 to thereby realize other systems including either a wondering/roaming old person tracing system or a system for allowing a transport company or taxi company to rapidly specify the nearest land vehicle to a customer of interest. Obviously, in case any individual person takes the mobile information terminal 10 in his or her motorcar, it becomes possible to establish not only a mere car navigation service but also a system for enabling the user to receive a variety of kinds of services stated supra.

In accordance with the multimedia information delivery/distribution system incorporating the principles of the present invention, it becomes possible to recognize the position or location of any user who is hand-carrying a mobile information terminal and provide information services utilizing such recognized location.

Another advantage of this invention is that completion of group preregistration makes it possible successfully recognize the location of a respective one of members who belong to the same group on a real-time basis without requiring mutual communications between members of the group.

Yet another advantage of the invention is that the position information of the individual mobile information terminal may be used to provide the distribution of people in an event place or at a sightseeing spot with or without its moving situation on a real time basis. Due to this, there is an advantage that the user is able to do prompt handling with respect to his or her activity to be next taken. Furthermore, since the recommended route search is made possible while taking into consideration the degree of congestion or popularity from the people distribution, it is possible to effectively provide route guidance that is easy to even beginners.

Still another advantage of the instant invention is that the capability to upload or download images from mobile information terminals to the information delivery server in units of individuals avoids the need for provision of any large storage means at the mobile information terminals, which in turn makes it possible to reduce the weight and production cost of such mobile information terminals.

A further advantage of the invention lies in an ability to establish an appropriate fee/charge determination scheme through execution of the Logging processing in units of users, once at a time whenever guidance is output to a mobile information terminal.

## Claims

1. An information delivery system including a plurality of information terminal devices (10a - 10n) and a server apparatus (50) connected to respective ones of said information terminal devices (10a - 10n) for providing information as required from each information terminal device (10a - 10n), **characterized in that** each of said plurality of information terminal devices (10a - 10n) comprises:
position detection means for detecting a position of itself,
terminal side communication means for transmitting information indicative of said position thus detected toward said server apparatus (50) while receiving information as sent from said server apparatus (50);
operation instruction receipt means for receiving and accepting from a user an operation instruction for instruction of the content of a service required and for permitting transmission of the operation instruction toward said server apparatus (50) through said terminal side communication means; and
output means for outputting the information as sent from said server apparatus (50) in a way corresponding to said service required, and that
said server apparatus (50) comprises:
server side communication means (50-1) for receiving information indicative of a position being sent from said each information terminal device (10a - 10n) and for transferring information as generated by utilization of the position information toward more than one information terminal device (10a - 10n) ; and
processor means (50-2) for generating information to be sent to said information terminal device (10a - 10n) by utilizing the position information as sent from said information terminal device (10a - 10n), wherein
said information terminal device (10a - 10n) is operable to detect the position of said information terminal device (10a - 10n) at a predefined timing for transmission of information indicative of the detected position toward said server apparatus (50), and
said server apparatus (50) further comprises position information storage means for storing therein position information as sent from said plurality of information terminal devices (10a - 10n) in units of users of the information terminal devices (10a - 10n).

2. The information delivery system as recited in claim 1, **characterized in that**
said information terminal device (10a - 10n) sends forth the information as to the position of said information terminal device (10a - 10n) toward said server apparatus (50) when corresponding to at least one of a case where a specified length of time has elapsed since its previous position information transmission event and a case where the position has changed by a degree greater than a predefined threshold value.

3. The information delivery system as recited in claim 1, **characterized in that**
said server apparatus (50) further comprises group information storage means (50-12) for storing therein information used to specify a group to which said user belongs on a per-user basis, and that
the processor means (50-2) of said server apparatus (50) comprises position service means (50-4) for generating, when the operation instruction being sent from said information terminal device (10a - 10n) requires a group display service, image information adapted to be used for displaying on the same land map image screen a combination of a user position as indicated by the position information from said information terminal device (10a - 10n) and a position as sent from the information terminal device (10a - 10n) of another user who belongs to the same group as said user and for permitting the image information thus generated to be transmitted from said server side communication means (50-1) to said information terminal device (10a - 10n).

4. The information delivery system as recited in claim 3, **characterized in that** in said server apparatus (50) of said information delivery system,
said group information storage means (50-12) is for storing, in addition to the information for specifying a group to which said each user belongs, group display flag information indicative of allowability of visual displaying of its own position when generating said processor means image information for displaying on the same land map image screen the position of a user belonging to the same group, and that
said position service means (50-4) generates image information for displaying on the same land map image screen only the user's position that said group information storage means indicates the allowance of display thereof.

5. The information delivery system as recited in claim 1, **characterized in that**
said server apparatus (50) further comprises personal information storage means for storing therein information as to each user with respect to predefined classification items,
the position information storage means of said server apparatus (50) stores a history of position in units of respective users, and
the processor means (50-2) of said server apparatus comprises distribution service means for extracting a user as classified based on one of said classification items when an operation instruction as sent from said information terminal device (10a - 10n) calls for a distribution service, for using the history of the position of such extracted user to generate information indicative of a distribution of user positions classified, and for permitting the generated information to be sent from said server side communication means (50-1) toward said information terminal device (10a - 10n).

6. The information delivery system as recited in claim 5, **characterized in that**
said classification items include at least one of a participative event, land area, age, male/female identification, time zone, date, and month.

7. The information delivery system as recited in claim 5, **characterized in that**
the distribution service means of the processor means (50-2) of said server apparatus (50) generates, when the operation instruction being sent from said information terminal device (10a - 10n) requests a congestion degree display service, information indicative of a degree of per-facility congestion from a presently verified number of users in units of a plurality of location-preregistered facilities, said users being in the same land area as the facility position or alternatively being positioned in a region within a range of a predetermined distance, and for transmitting information indicating the degree of congestion thus calculated with respect to each of said plurality of facilities toward said information terminal device (10a - 10n).

8. The information delivery system as recited in claim 5, **characterized in that**
the position information storage means of said server apparatus (50) stores a history of positions of said plurality of users, and
the distribution service means of the processor means (50-2) of said server apparatus (50) is operable, when the operation instruction being sent from said information terminal device (10a - 10n) requests a popularity degree display service, to calculate from the history of the positions of said plurality of users information indicative of a degree of popularity in units of multiple location-preregistered facilities and then send to said information terminal device (10a - 10n) the information indicating the degree of popularity thus calculated with respect to each of said plurality of facilities.

9. The information delivery system as recited in claim 1, **characterized in that**
the position information storage means of said server apparatus stores a history of the position of each user, and that
the processor means (50-2) of said server apparatus (50) comprises history service means for generating, when the operation instruction being sent from said information terminal device (10a - 10n) requires a history service, information indicative of a history of position of the user of the information terminal device (10a - 10n) which has sent the operation instruction thereto and for permitting transmission of the generated information from said server side communication means (50-1) to said information terminal device (10a - 10n).

10. The information delivery system as recited in claim 1, **characterized in that**
said information terminal device (10a - 10n) further comprises image upload means for sending image information to said server apparatus (50) through said terminal side communication means, and image download means for receiving image information from said server apparatus (50) via said terminal side communication means,
said server apparatus (50) further comprises image storage means for storing therein more than one image as sent from said information terminal device (10a - 10n) on a per-user basis, and
the processor means (50-2) of said server apparatus (50) comprises:
image service means for storing, when the operation instruction being sent from said information terminal device (10a - 10n) requests an image upload service, more than one image being sent from the information terminal device (10a - 10n) which has sent the operation instruction in said image storage means on a per-user basis, and
for permitting, when said operation instruction requests an image download service, transmission of image information being presently stored in said image storage means from said server side communication means (50-1) to said information terminal device (10a - 10n) in a way corresponding to the user of the information terminal device (10a - 10n) which has sent the operation instruction.

11. The information delivery system as recited in claim 5, **characterized in that**
the processor means (50-2) of said server apparatus (50) further comprises route search service means for searching, when the operation instruction being sent from said information terminal device (10a - 10n) requests a route search service, a recommended route leading to a given destination location, for generating image information for letting the recommended route be displayed on a land map, and for permitting transmission of the generated image information from said server side communication means (50-1) to said information terminal device (10a - 10n),
said distribution service means calculates an index number indicative of a degree of at least one of congestion and popularity with respect to each of a plurality of preregistered facilities, and
said route search service means searches for more than one recommended route while letting the index number thus calculated by said distribution service means be included as one of search conditions.

12. An information terminal device (10a - 10n) for receipt of provision of more than one information service while being connected to a server apparatus (50) operatively associated therewith, **characterized by** comprising:
position detection means for detecting a position of itself;
terminal side communication means for sending information indicative of said position thus detected toward said server apparatus (50) and for receiving information as sent from said server apparatus (50); and
said position detection means being operable to detect a position once at a time whenever a specified time has elapsed from its previous position information transmission event and then send forth information concerning such newly detected position toward said server apparatus (50) through said terminal side communication means.

13. An information terminal device (10a - 10n) for receipt of provision of more than one information service while being connected to a server apparatus (50) operatively associated therewith, **characterized by** comprising:
position detection means for detecting a position of itself;
terminal side communication means for sending information indicative of said position thus detected toward said server apparatus (50) and for receiving information as sent from said server apparatus (50); and
said position detection means transmitting, when the newly detected position changes to be greater than a predefined threshold value, information concerning the newly detected position toward said server apparatus (50) via said terminal side communication means.

14. A server apparatus (50) connected to a plurality of information terminal devices (10a - 10n) for providing information as required from each information terminal device, **characterized by** comprising:
server side communication means (50-1) for receiving information indicative of a position as sent from said each information terminal device (10a - 10n) and for sending information generated by utilizing the position information toward more than one information terminal device (10a - 10n);
processor means (50-2) for utilizing the position information as sent from said information terminal device (10a - 10n) to generate information to be sent to said information terminal device (10a - 10n); and
position information storage means for storing therein position information as sent from said each information terminal device (10a - 10n) and a history thereof in units of users of said information terminal devices (10a - 10n).

15. An information service providing method for use in an information delivery system comprising a plurality of information terminal devices (10a - 10n) and a server apparatus (50) connected to each of said plurality of information terminal devices (10a - 10n) for providing information as required from each information terminal device (10a - 10n), **characterized by** comprising the steps of:
causing each of said plurality of information terminal devices (10a - 10n) to send toward said server apparatus (50) both information indicative of its own position and information for specifying a group to which users of the information terminal devices (10a - 10n) belong;
permitting said server apparatus (50) to generate from the position information as sent from said plurality of information terminal devices (10a - 10n) and the information for specifying said group certain image information for synthesis and display of a position of each user belonging to the same group on the same land map and then send forth such generated image information toward a request-issued information terminal device (10a - 10n).

16. An information service providing method for use in an information delivery system comprising a plurality of information terminal devices (10a - 10n) and a server apparatus (50) connected to each of said plurality of information terminal devices (10a - 10n) for providing information as required from each information terminal device (10a - 10n), **characterized by** comprising the steps of:
causing each of said plurality of information terminal devices (10a - 10n) to send to said server apparatus (50) both information indicative of its own position and information indicating the content of a service required;
permitting said server apparatus (50) to generate information to be provided in reply to a request from said each information terminal device (10a - 10n) and send such generated provision information to a request-issued information terminal device (10a - 10n) presenting; and
letting said server apparatus (50) determine an amount of money charged on a user in accordance with the content of said sent provision information while storing a history of information indicative of the amount of charged money thus determined and that of said position information as sent thereto on a per-user basis.

17. An information service providing method for use in an information delivery system comprising a plurality of information terminal devices (10a - 10n) and a server apparatus (50) connected to each of said plurality of information terminal devices (10a - 10n) for providing information as required from each information terminal device (10a - 10n), **characterized by** comprising the steps of:
letting a user carry said information terminal device (10a - 10n) when the user comes into a land area in which a plurality of enterable facilities are disposed;
causing said each information terminal device (10a - 10n) to detect its own position and transmit information indicative of such detected position to said server apparatus (50); and
permitting said server apparatus (50) to calculate from position information being sent from each of said plurality of information terminal devices (10a - 10n) an index number indicating either a degree of congestion or a degree of popularity with respect to each of said plurality of facilities and then send information indicating such calculated index number to said information terminal device (10a - 10n) which has issued a request to do so.

18. An information service providing method for use in an information delivery system comprising a plurality of information terminal devices (10a - 10n) and a server apparatus (50) connected to each of said plurality of information terminal devices (10a - 10n) for providing information as required from each information terminal device (10a - 10n), **characterized by** comprising the steps of:
causing said each information terminal device (10a - 10n) to detect its own position and then send information indicative of the detected information to said server apparatus (50); and
permitting said server apparatus (50) to calculate from position information being sent from each of said plurality of information terminal devices (10a - 10n) an index number indicative of either a degree of congestion or popularity with respect to a plurality of preregistered facilities, execute a route search to determine a route leading to a destination location from a starting place under search conditions at least including the index number thus calculated, and send information indicating the searched route toward said information terminal device (10a - 10n) which has issued a request to do to.

19. An information service providing method for use in an information delivery system comprising a plurality of information terminal devices (10a - 10n) and a server apparatus (50) connected to each of said plurality of information terminal devices (10a - 10n) for providing information as required from each information terminal device (10a - 10n), **characterized by** comprising the steps of:
causing each of said plurality of information terminal devices (10a - 10n) to send to said server apparatus (50) both information indicative of its own position and information as required to be stored at said server apparatus (50); and
permitting said server apparatus (50) to store on a per-user basis said position information as sent thereto and said information required to be stored and then transmit, upon issuance of a request from said information terminal device (10a - 10n), the presently stored information to an original request-issued information terminal device (10a - 10n) in a way corresponding to the information terminal device's user.

20. An information service method using a plurality of information terminal devices (10a - 10n) and a server apparatus (50) connected to a respective one of said plurality of information terminal devices (10a - 10n) for receiving information from each information terminal device (10a - 10n), **characterized by** comprising the steps of:
causing said each information terminal device (10a - 10n) to detect its own position and send information indicative of such detected position to said server apparatus (50); and
letting said server apparatus (50) generate information indicating a distribution of users from the position information being sent from each of said plurality of information terminal devices (10a - 10n).
